# EUROPÄISCHE PATENTSCHRIFT

(11) **EP 2 495 357 B1**
(45) Veröffentlichungstag und Bekanntmachung des Hinweises auf die Patenterteilung: **08.10.2014**
(21) Anmeldenummer: 11190813.3
(22) Anmeldetag: 25.11.2011
(51) Int. Cl.: C25D 21/12, C23C 18/16, G01G 3/16, C25F 7/00, C25D 21/14

(54) **Einrichtung und Verfahren zur Messung der Geschwindigkeit oder der Stromausbeute bei der Abscheidung oder beim Abtrag von Oberflächen und zur darauf basierenden Prozesssteuerung**
Device and method for measuring the speed or current efficiency when depositing or removing surfaces and process control based on same
Dispositif et procédé destinés à la mesure de la vitesse ou de l'efficacité de courant lors du dépôt ou de l'enlèvement de surfaces et destinés à la commande de processus étant basés sur celles-ci

(30) Priorität: 25.11.2010 DE 102010061984
(43) Veröffentlichungstag der Anmeldung: 05.09.2012
(73) Patentinhaber: Somonic Solutions GmbH, 01217 Dresden (DE)
(72) Erfinder: Giebler, Eckart, 01159 Dresden (DE); Reich, Andy, 01219 Dresden (DE); Graefenhan, Wolfgang, 01237 Dresden (DE); Kramm, Ulrich, 12301 Berlin (DE); Hubert, Christian, 04319 Leipzig (DE); Wendt, Thomas, 04275 Leipzig (DE)
(74) Vertreter: Kaufmann, Sigfrid

(56) Entgegenhaltungen:
- DE-A1- 10 043 560
- DE-A1-102004 053 447
- JP-A- H10 132 646
- US-A- 5 201 215
- US-A1- 2005 023 142

## Beschreibung

Die Erfindung betrifft eine Einrichtung und Verfahren zur Messung der Geschwindigkeit oder der Stromausbeute bei der Abscheidung oder beim Abtrag von Oberflächen und zur darauf basierenden Prozesssteuerung.

Bei der nasschemischen Oberflächenbehandlung sind Verfahren zur Schichtabscheidung und abtragende Verfahren zu unterscheiden. Beide Verfahrensklassen können galvanisch, d.h. durch das Einprägen eines äußeren elektrischen Stroms, oder chemisch, d. h. außen stromlos realisiert werden.

Bei den nasschemischen Verfahren zur Schichtabscheidung werden vorwiegend Metalle abgeschieden. Das Ziel der galvanischen oder chemischen Metallabscheidung ist, bestimmte funktionelle Schichteigenschaften wie Korrosionsbeständigkeit, Härte, Duktilität, Leitfähigkeit oder dekorative Eigenschaften wie Farbe, Glanz zu erreichen. Die Schichteigenschaften stellen somit die wesentlichen Qualitätsmerkmale der Metallabscheidung dar. Sie werden insbesondere durch die Dicke, die stoffliche Zusammensetzung und die Gefügeeigenschaften der Schicht bestimmt. Diese Eigenschaften ergeben sich wiederum aus den Bedingungen, unter denen der Abscheidungsprozess abläuft.

Die nasschemischen Abtragsverfahren dienen der Entfernung unerwünschter Deckschichten wie Oxide, dem Abtrag von Schichtmaterial bspw. im Rahmen von Strukturierungsprozessen oder der gezielten Veränderung chemisch/physikalischer Eigenschaften der Oberfläche (z. B. Oberflächenrauhigkeit).

Die prozessbegleitende Gewinnung von Informationen zur nasschemischen Oberflächenbearbeitung hat infolge steigender Anforderungen an die Oberflächeneigenschaften eine zunehmende Bedeutung. In der industriellen Praxis ist eine messtechnische Überwachung der Abscheidung oder des Abtrags online nach wie vor schwierig, da geeignete Prozessmessverfahren fehlen. Um trotzdem eine qualitätsgerechte und effiziente Erzeugung der Metallschichten zu erreichen, werden die Prozessbedingungen bestmöglich stabilisiert. Aber auch hierbei treten erhebliche Probleme auf, da für viele relevante Prozessgrößen (insb. für Stoffkonzentrationen) prozesstaugliche Onlinemessverfahren fehlen und somit auf aufwändige Laboranalysen zurückgegriffen werden muss.

Einer der wichtigsten Parameter der nasschemischen Abscheide- und Abtragsvorgänge ist die Geschwindigkeit, mit der der jeweilige Prozess abläuft. Bei Abscheideprozessen muss sie bekannt sein, um spezifizierte Schichtdicken zu erreichen. Weiterhin hängen eine Reihe von Schichteigenschaften von der Abscheidegeschwindigkeit ab. Bei Abtragsprozessen ist die Abtragsgeschwindigkeit wichtig, um ein spezifiziertes Abtragsziel zu erreichen.

Die Abtrags- und Abscheidegeschwindigkeit ist chemisch gesehen eine Reaktionsgeschwindigkeit und kann entsprechend als Stoffumsatz pro Zeit oder als Masseumsatz pro Zeit angegeben werden. In der Oberflächentechnik wird die Abtrags- und Abscheidegeschwindigkeit i. d. R. flächenbezogen ausgedrückt. Dies kann als Masseumsatz pro Zeit und Fläche geschehen. Üblicher ist jedoch die Angabe in Form eines Zuwachses oder Abtrags der Schicht pro Zeit, z. B. mit der Einheit Mikrometer pro Stunde.

Für galvanische Prozesse, d. h. elektrochemische Vorgänge, die durch einen äußeren elektrischen Strom getrieben werden, lässt sich aus der Abtrags- bzw. der Abscheidegeschwindigkeit mit der Stromausbeute eine weitere wichtige Prozessgröße ableiten. Die Stromausbeute gibt an, welcher Anteil des eingeprägten elektrischen Stroms beim betrachteten Abtrags- oder Abscheidevorgang wirksam wird und wie groß der durch parallel laufende elektrochemische Konkurrenzreaktionen verbrauchte Stromanteil ist. Die Grundlage der Stromausbeuteermittlung ist das FARADAYSche Gesetz, das den Zusammenhang zwischen Ladungsträgerstrom (d. h. elektrischem Strom) und elektrochemischem Stoffumsatz angibt. Wird der gesamte eingeprägte elektrische Strom in einer Reaktion wirksam, entspricht das einer Stromausbeute von 1 bzw. von 100%. Laufen mehrere stromgetriebene Reaktionen parallel ab, ergeben sich für die einzelnen Stromausbeuten Werte von unter 100%. In der industriellen Praxis ist die Stromausbeute aus energetischer Sicht eine wichtige Prozessgröße, da ein möglichst großer Anteil der eingesetzten elektrischen Energie für die Abscheidung bzw. den Abtrag wirksam werden soll. Darüber hinaus, ist die Stromausbeute im Allgemeinen eine wichtige Qualitätsgröße des Oberflächenbehandlungsprozesses, da Konkurrenzreaktionen den Aufbau oder Abtrag der Schicht stören können. Ferner ist ein Absinken der Stromausbeute häufig ein Anzeichen für unerwünschte Veränderungen der Prozessbedingungen.

Eine Onlinemessung der Abtragsgeschwindigkeit, der Abscheidegeschwindigkeit oder der Stromausbeute findet an nasschemischen Prozessen in der Industrie derzeit nicht statt. Vereinzelt werden Probekörperverfahren eingesetzt, bei denen Referenzmuster mitbeschichtet werden und die Abscheidegeschwindigkeit durch per Hand durchgeführte Differenzwägung ermittelt wird, z. B. für Chemisch-Nickel-Prozesse [1]. Ein entsprechendes Probekörperverfahren stellt auch das in DE 19 35 231 beschriebene Verfahren dar, wobei hier die galvanisch abgeschiedene Stoffmenge alternativ per Differenzwägung oder per Schichtdickenmessung ermittelt wird. Nach einem ähnlichen Grundprinzip arbeitet das in EP 0 045 970 dargestellte Verfahren zur Stromausbeutemessung, bei dem eine Elektrolysezelle mit aus dem Behandlungsprozess entnommener Prozesslösung gefüllt wird und an einer rotierenden Scheibenelektrode abgeschieden wird; die Stromausbeute der Abscheidung wird dann durch einen mit definierter Stromausbeute ablaufenden elektrochemischen Auflöseprozess ermittelt. Nachteilig sind bei den beiden letztgenannten, per Hand durchgeführten Probekörperverfahren der hohe manuelle Aufwand und die damit verbundenen Kosten. Selbst wenn die entsprechenden Arbeiten regelmäßig von qualifiziertem Personal durchgeführt werden, liegen Messwerte der Abtragsgeschwindigkeit, der Abscheidegeschwindigkeit oder der Stromausbeute nur in größeren Abständen zu bestimmten Zeitpunkten vor. Eine durchgängige Prozess- und Qualitätskontrolle kann somit nicht gewährleistet werden. Auch die Nutzung der Messwerte für eine Prozessautomatisierung ist kaum möglich.

Es gab verschiedene Versuche, per Hand durchgeführte Verfahren durch automatisch ablaufende Messungen zu ersetzen. Darin einzuordnen ist die Stromausbeutemessung nach DE 31 441 87. Hier wird ein Probekörper als Elektrode geschaltet in die Prozesslösung eingebracht und die sich verändernde Schichtdicke gemessen. Aus Schichtdickenänderung und eingesetztem elektrischen Strom wird die Stromausbeute kontinuierlich ermittelt. Als nachteilig muss eingeschätzt werden, dass verfügbare Schichtdickenmessverfahren, zur Messung nach der Behandlung, d. h. zur Messung der trockenen Ware konzipiert sind. Messungen im Prozess lassen Schwierigkeiten mit der Messgenauigkeit erwarten. Ferner sind Probleme mit der Beständigkeit der Schichtdickenmesstechnik beim Insitu-Einsatz in rauer Prozessumgebung wie korrosive Medien und hohe Temperaturen wahrscheinlich. Nicht zuletzt handelt es sich um kein universelles Verfahren, da Schichtdickenmessverfahren immer nur für Schichtsysteme bestimmter Eigenschaften anwendbar sind; so sind z. B. magnetinduktive Messungen nur für nichtmagnetische Schichten auf magnetischem Grundmaterial geeignet. Für unterschiedliche Anwendungen einer auf Schichtdickenmessung basierenden Stromausbeutemessung müssen folglich verschiedenartige Schichtdickenmessverfahren appliziert werden.

Entsprechend beschränkt auf den Einsatz für bestimmte Materialien ist auch das in EP 0094545 dargestellte Wirbelstromverfahren, das zur Abscheidegeschwindig-keitsmessung dient. Nachteilig ist bei diesem Verfahren weiterhin die komplizierte Auswertung, da hierbei spezielle Verläufe der Wirbelstromverluste direkt nach Start der Abscheidung und im weiteren Verlauf ausgewertet werden müssen. Hierzu sind aufwendige Kalibrierungen und erhebliche Erfahrung beim Einsatz des Messverfahrens nötig.

Einen weiteren Versuch ein Probekörperverfahren auf Basis einer Wägung zu automatisieren, stellt DE 2039634 dar, bei dem eine Balkenwaage dazu dient, den zur Abscheidung in der Prozesslösung befindlichen Probekörper gegenüber einem zweiten Probekörper zu wiegen. Bei dem als Kompensationsmessverfahren gestalteten Prinzip wird auf dem zweiten Probekörper parallel galvanisch abgeschieden und der nötige Galvanisierstrom so eingestellt, dass die Abscheiderate auf beiden Probekörpern gleich ist. Abgesehen davon, dass die etwas komplizierte Wägemethode heute mit industrieller Standardtechnik einfacher lösbar wäre, bliebt bei einem Einsatz des Grundprinzips Wägung in einem realen oberflächentechnischen Prozess das Problem der Störanfälligkeit, da Bewegungen der Prozesslösung und aufsteigende Gasblasen zu erheblichen zufälligen und systematischen Abweichungen im zeitkontinuierlichen Signal der Wägung führen können.

Es wurden verschiedene Verfahren zur Ermittlung von Abtragsgeschwindigkeit, Abscheidegeschwindigkeit oder Stromausbeute vorgeschlagen, die auf elektrochemischen Grundprinzipien basieren. US 4 229 264 schlägt eine Messung der Ätzrate, d. h. der Abtragsgeschwindigkeit, mittels einer im Ätzmedium auf einer Elektrode erzwungenen Abscheidung mit anschließender Messung der zur Schichtauflösung nötigen Zeit vor. Problematisch ist hierbei die für das Verfahren vorausgesetzte Kenntnis, der bei der erzwungenen Abscheidung abgeschiedenen Masse. Da diese genau wie der Abtrag in komplexer Weise von den Prozessbedingungen abhängt, sind erhebliche Querempfindlichkeiten zu erwarten. JP 62063681 nutzt die Polarisationsspannung in einer Mess-Elektrolysezelle zur Berechnung der Abscheidegeschwindigkeit in Chemisch-Kupfer-Prozessen. Nach JP 58141373 dienen Wechselspannungen verschiedener Frequenzen zur Messung des Polarisationswiderstandes, mit dem wiederum die Abtragsgeschwindigkeit in Ätzprozessen überwacht werden kann. Nachteilig bei diesen beiden Methoden ist die mangelnde Robustheit, da die Polarisation in komplexer Weise von verschiedenen Prozessgrößen abhängt und somit darauf basierende Messverfahren in industriellen Anwendungen unerwünschte Querempfindlichkeiten erwarten lassen.

Die Messung der Abscheide- und der Abtragsgeschwindigkeit kann mit Einrichtungen nach dem Prinzip der Quarzmikrowaage erfolgen. Dieses auf SAUERBREY [2] zurückgehende Prinzip beruht auf der Frequenzverschiebung eines mit seiner Eigenfrequenz schwingenden Quarzes, auf dessen Oberfläche sich die Masse einer Schicht verändert. Insbesondere werden Quarzmikrowaagen im Forschungs- und Entwicklungsbereich eingesetzt, da Masseänderungen mit extrem großer Auflösung und hoher Dynamik verfolgt werden können. So lassen sich sowohl Abscheide- als auch Abtragsgeschwindigkeiten in unterschiedlich gearteten Prozessen messen [3]. Auch im Rahmen der Entwicklung von elektrochemischen Verfahren der Oberflächenbehandlung werden Quarzmikrowaagen eingesetzt [4]. Industriell angewendet wird das Verfahren an Vakuumprozessen, insbesondere beim Aufdampfen von Metallfilmen, wie z. B. in US 6 752 899 beschrieben oder beim Ionenätzen wie z. B. in DE 10 2006 029 039 beschrieben. Werden Quarzmikrowaagen in flüssigen Medien eingesetzt, beeinflussen Flüssigkeitseigenschaften wie die Dichte und die Viskosität die Messung. Das kann nach US 5 201 215 zum zusätzlichen Informationsgewinn genutzt werden, kann aber auch als Querempfindlichkeit bei der Messung der Abscheide- oder Abtragsgeschwindigkeit wirken. Eine aktuelle Entwicklung stellt die Nutzung spektraler Daten aus Messungen mit Quarzmikrowaagen dar. So wird nach WO 2009/060100 ein Impedanzbereich gescannt und die gewonnenen Messdaten geeignet an mathematische Funktionen angepasst. Um somit über das Bestimmen mindestens einer Resonanzfrequenz Masseänderungen zu ermitteln. Trotz der inzwischen beträchtlichen Zeit, in der Einrichtungen nach dem Prinzip der Quarzmikrowaage zur Messung der Abscheide- und der Abtragsgeschwindigkeit insbesondere in Forschung und Entwicklung angewendet werden, kommt die entsprechende Messtechnik nicht zur prozessbegleitenden Überwachung nasschemischer Abscheide- oder Abtragsprozesse zum Einsatz. Das hat insbesondere die folgenden Gründe. Erstens ist die Technik nicht hinreichend robust für den Einsatz unter den rauen betrieblichen Bedingungen einer nasschemischen Oberflächenbehandlung. Probleme sind zu erwarten, da der Quarz als Sensor direkt den teils hoch korrosiven Medien bei häufig hohen Temperaturen ausgesetzt wäre. Zweitens ist die sonst erwünschte sehr hohe Empfindlichkeit der Quarzmikrowaage kritisch, da diese eine hohe Kennliniensteilheit und damit kurze Sensorstandzeiten zur Folge hat. Problematisch ist hierbei besonders, dass die Schicht direkt und untrennbar mit dem Quarz verbunden ist. Nötig ist hier also ein häufiger Austausch des Quarzes oder alternativ eine Regenerierung des Sensors durch Schichtentfernung bzw. Beschichtung. Beides ist bei einem Prozessmessgerät unter betrieblichen Bedingungen schwierig. Drittens stehen dem prozessmesstechnischen Einsatz von Quarzmikrowaagen die nicht unerheblichen Gerätekosten und der Bedarf an hoch qualifiziertem Personal entgegen.

Eine andersgeartete messtechnische Nutzung quarzerregter Schwingungen wurde in [5] vorgestellt. Bei den dort beschriebenen Einrichtungen werden beidseitig eingespannte Bänder in Längsschwingungen versetzt. Durch Auswertung des Frequenz- und Phasenverlaufs lassen sich Eigenschaften des Fluids ermitteln, die das Sensorband umgeben. So sind der E-Modul, die Viskosität und über Ablagerungen auf dem Band auch Staubkonzentrationen messbar. In DE 10 2004 053 447 wird eine entsprechende Einrichtung dargestellt, bei der ein longitudinal schwingender Bandsensor genutzt wird, um die kinematische Viskosität, die Dichte und die Kompressibilität des die Sensorklinge umgebenden Fluids zu messen.

### Referenzen:

[1] Riedel, W.: Funktionelle Chemische Vernickelung. 1. Aufl., Leuze Verlag, 1989, S.164
[2] Sauerbrey, G.: Verwendung von Schwingquarzen zur Wägung dünner Schichten und zur Mikrowägung. Zeits. f. Physik 155 (1959) S. 206-222
[3] Schumacher, R.: The Quartz Microbalance - A Novel Approach to the In-Situ Investigation of Interfacial Phenomena at the Solid/Liquid Junction. Angewandte Chemie Intern. Ed. in Engl. 29 (1990) 4, S. 329-438
[4] Kurtz, O.; Barthelmes, J.; Rüther, R.; Wünsche, M.; Donner, C.: Quartz Crystal Microbalance used to Characterize Electrochemical Metal Deposition. J. Electrochemistry and Plating Technology 1 (2010) 2, S. 33-41
[5] Kramm, K. U.: Bestimmung von Massen, Viskositäten und E-Moduln mit dem longitudinal schwingenden Band. Dissertation T.U. Berlin, 1985

Der Erfindung liegt die Aufgabe zu Grunde, die Geschwindigkeit bei der Abscheidung oder beim Abtrag von Oberflächen prozessbegleitend zu messen. Für galvanische, d.h. für durch einen äußeren elektrischen Strom getriebene Oberflächenbehandlungsprozesse soll darüber hinaus auch die Stromausbeute prozessbegleitend messbar sein. Weiterhin besteht die Aufgabe, auf Basis der Onlinemessung von Abscheidegeschwindigkeit, Abtragsgeschwindigkeit oder Stromausbeute eine geeignete Prozesssteuerung zu realisieren, welche der Prozessstabilisierung dient.

Ziel ist hierbei das Erreichen des Behandlungsziels der Oberflächenbehandlung besser zu sichern; insbesondere soll die exakte Realisierung vorgegebener Schichtdicken oder Schichtabträge unterstützt werden. Die Messung soll unmittelbar im oder am Oberflächenbehandlungsprozess erfolgen und somit die Prozesse der Oberflächenbehandlung gut abbilden. Somit sind das Messverfahren und die darauf basierende Steuerung für den Einsatz an industriellen Prozessen zu gestalten. Entsprechend sind insbesondere hohe Anforderungen an die Robustheit, den geringen Wartungsaufwand und den weitgehend automatisierten Betrieb zu erfüllen.

Die Aufgabe wird durch ein Verfahren gemäß dem unabhängigen Anspruch 1 gelöst. Die abhängigen Ansprüche 2 bis 9 betreffen besondere Ausführungsformen des Verfahrens. Die Aufgabe wird vorrichtungsseitig durch den Anspruch 10 gelöst. Die abhängigen Vorrichtungsansprüche 11 bis 15 betreffen besondere Ausführungsformen der Vorrichtung.

Die Erfindung betrifft ein Verfahren bei dem ein stabförmiger Sensor in den Prozess der Abscheidung oder des Abtrags eingebracht wird. Auf einem Teil des Sensors findet prozessadäquat eine Abscheidung oder ein Abtrag statt. Der stabförmige Sensor wird in longitudinale Schwingungen versetzt. Dabei werden die Erregungsfrequenz und die Sensorgeometrie so aufeinander abgestimmt, dass im Stab eine stehende Welle entsteht, bei der sich der Knotenpunkt der Schwingung am Erregungspunkt und ein Maximum der longitudinalen Auslenkung an der Stabspitze befinden. Im Sensorkopf erfolgt mit einem geeigneten Sensor eine Rückmessung der sich am Sensorstab einstellenden Schwingung. Die sich zwischen Erregungs- und Empfängerschwingung einstellende Phasenverschiebung dient nun als Grundlage für eine Phasenregelung. Dazu wird die Erregungsfrequenz so nachgeführt, dass durch die Phasenregelung ein Phasenwinkel von 90° eingestellt wird und der Stabsensor somit fortlaufend mit seiner Eigenfrequenz schwingt. Da die Eigenfrequenz des longitudinal schwingenden Stabes von dessen Masse abhängt, lässt sich bei Abscheidung oder Abtrag auf der Stabspitze aus der veränderlichen Eigenfrequenz in einer geeigneten Einheit zur Informationsverarbeitung ein zeitlicher Verlauf der Masse fortlaufend ableiten.

Sind die Fläche und Dichte der Schicht bekannt, kann aus dem Masseverlauf kontinuierlich eine Schichtdicke berechnet werden. Die Fläche, an der am Sensor eine Abscheidung oder ein Abtrag stattfindet, kann sich bei dicken Schichten z. B. durch Aufrauhung oder durch Geometrieeffekte in gewissem Maße ändern. Ist diese Änderung reproduzierbar, kann es eine vorteilhafte Ausgestaltung des Messverfahrens sein, eine schichtdickenabhängige Flächenkorrektur zu berücksichtigen.

In einer Ausgestaltung des Verfahrens ist es vorgesehen, eine Geschwindigkeit der Abscheidung oder des Abtrags zu ermitteln. Dabei ist der zeitliche Verlauf der Schichtdicke zu differenzieren. Durch die Differentiation entsteht ein extrem verrauschtes Signal, welches als Messwert unbrauchbar ist. Daher sollten die hochfrequenten Signalanteile durch einen geeigneten Tiefpass herausgefiltert werden. Um Aliasingeffekte zu vermeiden muss eine Tiefpassfilterung ggf. analog vor der entsprechenden Abtastung erfolgen. Eine vorteilhafte Gestaltungsvariante ist die Differentiation und Tiefpassfilterung durch einen geeigneten Bandpassfilter zu ersetzen, der den zeitlichen Verlauf der Änderungsgeschwindigkeit der Massebelegung mit geringerer Verzögerung in Echtzeit berechnet. Der zeitliche Verlauf der Zunahme- oder Abnahmegeschwindigkeit der Schicht kann wie in der Oberflächentechnik üblich in der Form Schichtänderung pro Zeiteinheit, also z. B. in Mikrometer pro Stunde, angegeben werden.

Die Aufgabe einer Stromausbeutemessung wird erfindungsgemäß gelöst, indem die beschriebene Einrichtung so erweitert wird, dass eine galvanische Abscheidung oder ein galvanischer Abtrag auf einem leitfähigen Sensorteil, der als Elektrode geschaltet wird, stattfindet. Vorteilhaft wird dazu ein metallischer Probekörper verwendet. In der Nähe des Probekörpers wird durch die elektrolytische Prozesslösung getrennt eine Gegenelektrode positioniert. Die Gegenelektrode wird vorteilhaft so gestaltet, dass eine gleichmäßige Stromdichte auf der Fläche der Abscheidung bzw. des Abtrags entsteht. Für einige Elektrolysesysteme müssen die Sensorelektrode und die Gegenelektrode aus elektrochemischen Gründen zusätzlich durch eine Trennschicht separiert werden. Als Trennschicht können ein Diaphragma oder eine für die eingesetzten Elektrolyte passende Ionenaustauschermembran dienen. Nun kann, durch eine Stromquelle getrieben, ein Elektrolysestrom eingestellt werden, der auf dem Probekörper eine Abscheidung oder einen Abtrag realisiert. Aus dem zeitlichen Verlauf der Änderungsgeschwindigkeit der Massebelegung und aus dem Elektrolysestrom lässt sich unter Nutzung des FARADAYSchen Gesetzes ein zeitlicher Verlauf der Stromausbeute kontinuierlich berechnen.

Durch die auf dem Sensor stattfindende Abscheidung oder den Abtrag ist nach einer bestimmten Zeit ein Eingriff nötig.

Dieser Eingriff ist besonders einfach, wenn ein Probekörper verwendet wird. Das Ende der Standzeit des Probekörpers ergibt sich bei abtragenden Verfahren, wenn der Probekörper auf einem Teil seiner Fläche bis zum Grundmaterial aufgelöst ist. Bei der Messung der Abscheidegeschwindigkeit ist die Standzeit prinzipiell durch das Erreichen einer Massegrenze limitiert. Beim erfindungsgemäßen Sensor spielt die Grenze jedoch kaum eine Rolle, da die abgeschiedenen Massen klein im Vergleich zur Sensorgrundmasse sind. Hier ergeben sich die Grenzen praktisch durch sich allmählich ändernde Schichteigenschaften (insbesondere Rauigkeit und damit Bezugsfläche) bei der Abscheidung sehr dicker Schichten. Beim Erreichen der Standzeit wird der Probekörper von der Sensorstabspitze 205 gelöst und durch einen neuen ersetzt. Um die dabei nötigen Handlungen einfach zu gestalten, sind der Sensor und der Probekörper form- oder kraftschlüssig verbunden. Ferner wird der Wechsel des Probekörpers dadurch unterstützt, dass die den Probekörper tragende Spitze des Stabsensors durch ein leicht lösbares Schwenk- oder Steckprinzip mit geringem manuellen Aufwand in die bzw. aus der Prozesslösung gebracht werden kann.

Bei der Messung von Abscheidegeschwindigkeiten kann eine Alternative zum Einsatz von Probekörpern darin bestehen, dass die Abscheidung auf dem Sensorgrundkörper stattfindet. Die nach einer bestimmten Einsatzzeit des Sensors nötige Entfernung der Probeschicht kann in diesem Fall durch chemisches oder elektrochemisches Auflösen erfolgen.

Zur Senkung des Kalibrieraufwandes kann der Probekörperwechsel vorteilhaft zu einer Autokalibrierung genutzt werden. Das ist möglich, da sich der Zusammenhang zwischen Eigenfrequenz der Sensorschwingung und Masse der auf dem Sensor in Abscheidung oder Abtrag befindlichen Schicht im Allgemeinen als mathematische Funktion mit zwei Funktionsparametern darstellen lässt. Wird ein Probekörper bekannter Masse mit dem Stabsensor verbunden, kann die sich ändernde Eigenfrequenz genutzt werden, um daraus die beiden Funktionsparameter zu ermitteln.

Die prozessbegleitende Messung der Geschwindigkeit der Oberflächenabscheidung oder des Oberflächenabtrages kann in verschiedener Weise am Prozess erfolgen. So ist es möglich, die erfindungsgemäße Messung inline durchzuführen. Dabei befindet sich der Stabsensor direkt in der Prozesslösung des nasschemischen Oberflächenbehandlungsprozesses, d. h. in unmittelbarer Nähe der zu behandelnden Ware. Eine alternative Möglichkeit ist die Messung in einem Bypass. Dabei wird Prozesslösung des nasschemischen Oberflächenbehandlungsprozesses in eine Messzelle geleitet und dort findet unter definierten Bedingungen (Temperatur, hydrodynamische Verhältnisse) eine Abscheidung bzw. ein Abtrag am Stabsensor statt.

Die Messung der Abscheidegeschwindigkeit, Abtragsgeschwindigkeit oder Stromausbeute kann in verschiedener Weise durchgeführt und interpretiert werden. Es ist erstens möglich, die am Stabsensor herrschenden Prozessbedingungen, insbesondere Temperatur, Hydrodynamik und bei galvanischen Prozessen auch die Stromdichte, möglichst ähnlich den Verhältnissen an der zu behandelnden Warenoberfläche einzustellen. Dann stellen die gemessenen Verläufe der Abscheidegeschwindigkeit, Abtragsgeschwindigkeit oder Stromausbeute ein Abbild der an der Warenoberfläche ablaufenden Prozesse dar. Alternativ ist es zweitens möglich, die am Stabsensor herrschenden Prozessbedingungen, insbesondere Temperatur, Hydrodynamik und bei galvanischen Prozessen auch die Stromdichte, möglichst konstant einzustellen, selbst wenn gewisse Abweichungen zu den Verhältnissen an der zu behandelnden Warenoberfläche auftreten. In diesem Fall stellen die gemessenen Verläufe der Abscheidegeschwindigkeit, Abtragsgeschwindigkeit oder Stromausbeute ein Maß für die Wirksamkeit der Prozesslösung dar.

Um die erfindungsgemäße Messung genau durchführen zu können, darf die Abscheidung oder der Abtrag nur an der dafür vorgesehenen Fläche nicht jedoch am Sensorgrundkörper stattfinden. Das ist durch geeignete Maßnahmen sicherzustellen. Eine vorteilhafte Gestaltung des Stabsensors ist daher, den Sensorgrundkörper aus einem nicht leitenden Material zu fertigen oder ihn mit einer nicht leitenden Schutzschicht zu überziehen. Somit können die entsprechenden elektrochemischen Abscheide- oder Abtragsvorgänge verhindert werden. Alternativ kann es vorteilhaft sein, den Sensorgrundkörper und den Probekörper aus elektrisch leitenden Materialien zu fertigen, diese jedoch elektrisch zu isolieren und auf verschiedene Potentiale zu legen. Wird entsprechend bei galvanischen Vorgängen der Probekörper als Kathode oder Anode geschaltet, der Sensorgrundkörper jedoch auf Nullpotential gelegt, kommt es dort nicht zu Abscheidung oder Abtrag. Bei außenstromlosen Vorgängen kann die Potentialtrennung genutzt werden, um den Sensorgrundkörper auf ein Schutzpotential zu legen und somit eine Abscheidung bzw. einen Abtrag zu verhindern.

Weitere Maßnahmen zur vorteilhaften Ausgestaltung der Messeinrichtung dienen der robusten, störunempfindlichen Messung. So kann es vorteilhaft sein, zusätzlich zur Phasenregelung eine Amplitudenregelung zu realisieren. Dazu wird die Erregungsleistung der longitudinalen Schwingung durch ein Regelglied variiert, um die Amplitude der Empfängerschwingung auf einen konstanten Wert zu regeln. Somit wird für unterschiedliche Messbedingungen ein hinreichender Signal-Rauschabstand gesichert. Eine weitere vorteilhafte Ausgestaltung ist die Realisierung einer Temperaturkompensation. Dazu erfolgt eine Temperaturmessung an einem oder mehreren Punkten im Sensor, vorzugsweise im Sensorschaft und in der Nähe der Schwingungserregung und der Schwingungsmessung. Die gemessene Temperatur wird dazu genutzt in der informationsverarbeitenden Einheit, die Temperaturabhängigkeit der Eigenfrequenz bei der Berechnung der Massebelegung zu kompensieren.

Der erfindungsgemäß gemessene Wert der Abscheidegeschwindigkeit, Abtragsgeschwindigkeit oder Stromausbeute lässt sich zur Überwachung des jeweiligen Oberflächenbehandlungsprozesses nutzen. Bei Veränderungen der gemessenen Größe können Ursachen ermittelt werden und ein Bediener kann entsprechend in den Prozess eingreifen. Da das erfindungsgemäße Verfahren einen kontinuierlichen, nur geringfügig verzögerten Messwert liefert, kann über solche manuellen Eingriffe hinaus auch automatisch in den Oberflächenbehandlungsprozess eingegriffen werden. So lassen sich spezifizierte Schichtdicken gezielt abscheiden oder abtragen, indem die Dauer der Behandlung der Warenoberfläche entsprechend des Messsignals der Abscheidegeschwindigkeit, Abtragsgeschwindigkeit oder Stromausbeute automatisch adaptiert wird.

Eine alternative Strategie zur automatisierungstechnischen Nutzung der Messung ist die Stabilisierung der Abscheidegeschwindigkeit, Abtragsgeschwindigkeit bzw. Stromausbeute. Diese kann wiederum dem Erreichen einer spezifizierten Abscheidung bzw. eines spezifizierten Abtrags dienen. Darüber hinaus können konstante Abscheide-, Abtrags- bzw. Stromausbeuteverhältnisse der Stabilisierung von Qualitätsparametern der Oberflächenbehandlung (z. B. Rauigkeit, Zusammensetzung, Härte) dienen. Die Stabilisierung der Abscheidegeschwindigkeit, Abtragsgeschwindigkeit bzw. Stromausbeute kann erstens durch eine geeignete Nachdosierung von Einsatzchemie erreicht werden. Zweitens kann die entsprechende Stabilisierung durch Verwurf von Prozesslösung und entsprechenden Ersatz mit frischer oder störstoffarmer Prozesslösung erreicht werden. Eine dritte Möglichkeit ist die Stabilisierung der Abscheidegeschwindigkeit, Abtragsgeschwindigkeit bzw. Stromausbeute durch Adaptieren von Prozessparametern über unterlagerte Regelungen. Solche unterlagert geregelten Prozessgrößen können z. B. die Temperatur der Prozesslösung, der pH-Wert oder Stoffkonzentrationen sein. Bei galvanischen Verfahren steht als zusätzliche Möglichkeit zur Prozessstabilisierung die Stromausbeute zur Verfügung. So kann die Stromausbeute durch Veränderung des eingeprägten Elektrolysestroms, d. h. durch Veränderung der Stromdichte, in bestimmten Bereichen auf einen konstanten Wert geregelt werden.

Die Erfindung betrifft vorrichtungsseitig eine Sensorik zur Messung veränderlicher Massen und deren Einsatz zur probekörperbasierten Messung der Abscheide- oder Abtragsgeschwindigkeiten bzw. der Stromausbeute. Der Messaufnehmer ist dabei als stabförmiger Sensor gestaltet, der in longitudinale Schwingungen mit einem Amplitudenmaximum an der Sensorspitze versetzt wird und an dessen Spitze die Abscheidung oder der Abtrag einer Schicht stattfindet. Die Versetzung in longitudinale Schwingungen erfolgt durch eine im Sensorkopf realisierte piezoelektrische oder magnetostriktive Anregung.

Eine Phasenregelung realisiert den fortlaufenden Betrieb des Schwingungssensors mit seiner Eigenfrequenz, die die sich ändernde Schichtmasse abbildet. Aus dem Verlauf der Schichtmasse wird kontinuierlich der Verlauf der Abscheide- oder Abtragsgeschwindigkeit berechnet. Bei galvanischen Prozessen kann daraus ein Stromausbeuteverlauf abgeleitet werden. Die Abscheidung oder der Abtrag erfolgt am Sensor i. d. R. auf einem Probekörper, der mit der Sensorspitze leicht montierbar und lösbar verbunden ist; somit ist der regelmäßig nötige Probekörperwechsel einfach durchführbar.

Der Sensor wird in nasschemischen Oberflächenbehandlungsprozessen inline oder in einen Bypass eingebracht und ermöglicht die Onlinemessung der Abscheide- oder Abtragsgeschwindigkeit und der Stromausbeute für den an der Sensorspitze stattfindenden Vorgang. Herrschen an der Sensorspitze ähnliche Verhältnisse wie an der Oberfläche der zu behandelnden Ware, so wird ein Mittelwert der Abscheide- oder Abtragsgeschwindigkeit bzw. der Stromausbeute an der Ware gemessen. Herrschen abweichende aber definierte Bedingungen, so lässt sich die Wirksamkeit der Prozesslösung messtechnisch erfassen. Die gemessene Größe kann in unterschiedlicher Weise zum automatisierten Eingriff in den Oberflächenbehandlungsprozess mit dem Ziel der Prozessstabilisierung genutzt werden. So kann die Warenbehandlungszeit angepasst werden, es kann dosiert oder verworfen werden oder es können Prozessparameter über unterlagerte Regelungen angepasst werden; bei galvanischen Prozessen kann die Stromausbeute über den Elektrolysestrom geregelt werden.

Ein Aspekt der Erfindung ist die Nutzung eines in longitudinale Schwingungen erregten Sensorsystems zur Messung der Geschwindigkeit einer Schichtabscheidung oder eines Schichtabtrags. Durch eine stabförmige Sensorausführung wird eine örtliche Trennung der Schwingungserregung und -messung vom Schichtabtrag oder der Schichtabscheidung erreicht. Die Anwendung eines angepassten Probekörpers, der kraft- oder formschlüssig mit der Sensorspitze verbunden wird, ermöglicht einen einfachen Probekörperwechsel, wobei die Elemente zur Schwingungserregung und -messung unberührt bleiben. Der wechselbare Sensorteil ist entsprechend einfacher und somit kostengünstiger als bei Quarzmikrowaagen gestaltet, bei denen der ganze Quarz zu wechseln ist. Auf dem Sensor können erhebliche Schichtdicken abgeschieden oder abgelöst werden, wodurch sich lange Standzeiten der Probekörper ergeben. Die spezielle stabförmige Gestaltung des Sensors beseitigt Querempfindlichkeiten zu Stoffeigenschaften der Prozesslösung weitgehend. Wird der Sensor quarzerregt, erfolgt der Betrieb des Quarzes weit unterhalb seiner Resonanzfrequenz; die Eigenfrequenz des Sensors wird hingegen vom Schwingungsverhalten des Stabes bestimmt. Daher kommen Eigenschaftsänderungen im Frequenzverhalten der Quarze nicht zum Tragen. Mit der Erfindung steht erstmals ein unter industriellen Bedingungen einsetzbares Prozessmessverfahren zur Onlinemessung der Abtrags- oder Abscheidegeschwindigkeit bzw. der Stromausbeute zur Verfügung. Darauf basierend sind neuartige automatisierungstechnische Strukturen zur Stabilisierung der Oberflächenbehandlungsprozesse möglich. So kann jetzt die Abtragsgeschwindigkeit, die Abscheidegeschwindigkeit und die Stromausbeute unter industriellen Bedingungen durch einen geschlossenen Kreis geregelt werden; die Schichtdicke kann durch einen offenen Kreis gesteuert werden.

Durch die Anwendung der Erfindung können eine Reihe von Vorteilen erzielt werden. Die erfindungsgemäße Messung der Abscheide- oder Abtragsgeschwindigkeit auf Basis eines longitudinal schwingenden Stabsensors zeichnet sich durch universelle Einsatzmöglichkeiten aus. Es bestehen keine speziellen Voraussetzungen an die Materialien der Schicht und des Substrats. Die Messung hat eine geringe Störempfindlichkeit und eine gute Robustheit. Bisher industriell genutzte Probekörperverfahren sind per Hand durchgeführte Methoden, die nur in größeren Zeitabständen einen Messwert liefern. Das Gleiche gilt für die im Labor ausgeführten Schichtdickenmessungen. Dagegen liefert das erfindungsgemäße Messverfahren einen zeitkontinuierlichen, nur geringfügig verzögerten Messwert. Bei der erfindungsgemäßen Verwendung von Probekörpern zur Abscheidung oder zum Abtrag ergeben sich wichtige Vorteile aus der trennbaren Ausführung von Schwingungserzeugung und -empfänger einerseits und dem masseveränderlichen Teil des Sensors andererseits. So muss beim Erreichen der Standzeit nur der Probekörper und nicht wie bei der Quarzmikrowaage der gesamte Sensor gewechselt werden. Da die Probekörper relativ einfach zu fertigende Körper sind, ist eine wirtschaftlich vertretbare Einwegnutzung der Probekörper möglich. Weiterhin sichern geeignete konstruktive Maßnahmen einen einfachen Probekörperwechsel am Prozess. Mit dem Wechsel kann eine Autokalibrierung zur Ermittlung der Parameter der Masse-Frequenz-Funktion verbunden werden. Die Standzeit der Probekörper wird durch den Messbereich der Massebelegung praktisch nicht begrenzt; die Begrenzung bilden die sich verändernden Eigenschaften sehr dicker Schichten. Entsprechend ergibt sich im Vergleich zur Quarzmikrowaage eine längere Standzeit und damit ein seltenerer Probekörperwechsel. Bei Abscheideprozessen besteht bei regelmäßigem Wechsel der Probekörper die Möglichkeit, diese unter Produktionsbedingungen beschichteten Proben zur Dokumentation der qualitätsgerechten Abscheidung aufzubewahren.

Weitere Vorteile ergeben sich aus der Nutzung des Onlinemesswertes der Abscheide- oder Abtragsgeschwindigkeit bzw. der Stromausbeute zur Prozessführung. So können Abweichungen im Prozessgeschehen bereits während der Oberflächenbehandlung und nicht erst im Nachhinein erkannt werden und entsprechend sind schnelle Reaktionen möglich. Bei nicht automatisiertem Prozessbetrieb können die Ursachen von Veränderungen der gemessenen Größe zeitnah ermittelt werden, z. B. indem Elektrolytkonzentrationen überprüft werden; somit sind geeignete Prozesseingriffe möglich. Insbesondere können die Onlinemessgrößen Abscheide- oder Abtragsgeschwindigkeit bzw. Stromausbeute für verschiedenartige automatische Prozesseingriffe genutzt werden. So können die-spezifizierten Schichtdicken durch Variation der Behandlungsdauer besser erreicht werden. Durch Nachdosierung von Einsatzchemie, Verwurf von Prozesslösung oder Adaptieren von Prozessparametern kann der Abscheide- oder Abtragsprozess stabilisiert werden. Bei galvanischen Prozessen kann zusätzlich die Stromausbeute stabilisiert werden.

Im Folgenden werden das erfindungsgemäße Verfahren und die erfindungsgemäße Vorrichtung unter Bezugnahme auf die beigefügten Zeichnungen anhand von Ausführungsbeispielen detaillierter beschrieben. Es zeigen:
- Fig.1: eine Ausführungsform der erfindungsgemäßen Vorrichtung,
- Fig.2: eine Ausführungsform der erfindungsgemäßen Vorrichtung für einen nasschemischen Prozess,
- Fig.3: ein Blockschaltbild zur Berechnung der Abscheidegeschwindigkeit,
- Fig.4: ein Blockschaltbild zur Berechnung der Abscheidegeschwindigkeit und Stromausbeute,
- Fig.5: ein Blockschaltbild zur Berechnung der Änderungsgeschwindigkeit der Massebelegung mit Bandpassfilter,
- Fig.6: ein Blockschaltbild zur Berechnung der Abscheidegeschwindigkeit mit schichtdickenabhängiger Flächenkorrektur,
- Fig.7: eine Vorrichtungsausführung in einer Chemisch-Nickel-Lösung,
- Fig.8: eine Vorrichtungsausführung mit separater Messzelle und Bypass,
- Fig.9: eine Vorrichtungsausführung mit Transportsteuerung,
- Fig.10: eine Vorrichtungsausführung mit Nachdosierung von Einsatzchemie,
- Fig.11: eine Vorrichtungsausführung mit Nachdosierung und Verwurf von Einsatzchemie,
- Fig.12: eine Vorrichtungsausführung mit Temperaturregelung,
- Fig.13: eine Vorrichtungsausführung mit Stromdichteregelung,
- Fig.14: ein Blockschaltbild mit Funktionsblöcken einer
Ausführungsform der Erfindung und
- Fig.15: ein Diagramm von Prozessgrößen über der Zeit.

### Ausführungsbeispiele

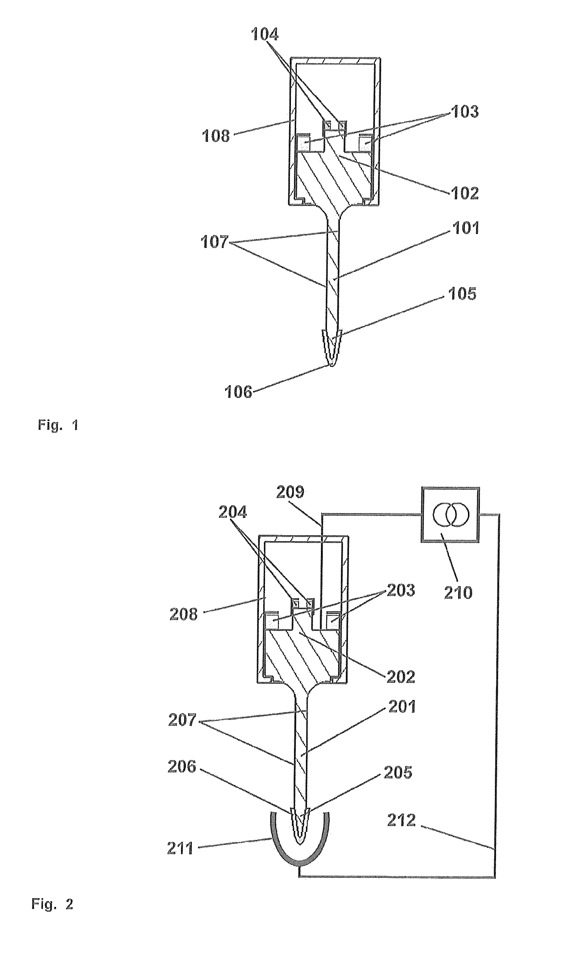

Fig.1 zeigt eine Ausführungsform der Vorrichtung. Ein stabförmiger Sensorgrundkörper 101 ist über seinen Sensorkopf 102 mit einem Element zur Schwingungsanregung 103 gekoppelt. Der Sensorgrundkörper 101 wird durch Abstimmung von Sensorgeometrie und Erregungsfrequenz derart in Schwingung versetzt, dass sich im Sensorgrundkörper 101 eine stehende Welle ausbildet, bei der sich der Knotenpunkt der Schwingung am Erregungspunkt und ein Maximum der longitudinalen Auslenkung an der Stabspitze 105 befinden. Im Sensorkopf 102 erfolgt mit einem geeigneten Sensor eine Rückmessung 104 der sich am Sensorgrundkörper 101 einstellenden Schwingung. Die sich zwischen Erregungs- und Empfängerschwingung einstellende Phasenverschiebung dient als Grundlage für eine Phasenregelung, wobei die Erregungsfrequenz derart nachgeführt wird, dass der stabförmige Sensorgrundkörper 101 fortlaufend mit seiner Eigenfrequenz schwingt. Die Oberfläche des Sensors weist zwei Bereiche auf. Auf einem Bereich der Sensoroberfläche 107 findet kein Schichtabscheidung oder kein Schichtabtrag statt. Auf einem weiteren Bereich der Sensoroberfläche 106 findet eine Schichtabscheidung oder ein Schichtabtrag statt. Dieser Bereich ist in Form eines Probekörpers 106 ausgebildet, welcher mit der Sensorstabspitze 105 form- oder kraftschlüssig verbunden ist. Sensorkopf 102, das Element zur Schwingungsanregung sowie der Aufnehmer zur Rückmessung der Schwingung 104 sind in einem Sensorkopfgehäuse 108 angeordnet.

Fig. 2 zeigt die Vorrichtung von Fig. 1 modifiziert für einen galvanischen Prozess. Der Sensor, insbesondere der Probekörper 206 ist als Elektrode ausgebildet und über eine elektrische Verbindung 209 mit einer elektrischen Stromquelle 210 verbunden. Gegenüber der Sensorspitze 205 ist eine Gegenelektrode angeordnet, welche über eine weitere elektrische Verbindung 212 ebenfalls mit der Stromquelle 210 verbunden ist, so dass galvanisch auf dem Probekörper 206 abgeschieden werden kann.

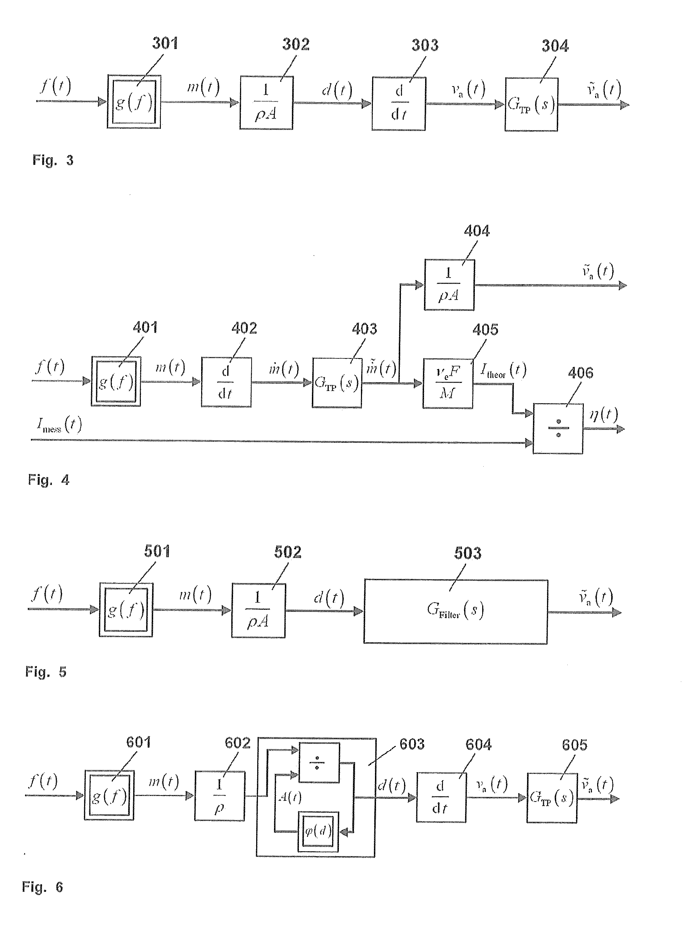

Fig. 3 zeigt ein Blockschaltbild einer Ausführungsform des Verfahrens zur Bestimmung der Abtrags- oder Abscheidegeschwindigkeit. Über den Masse-Frequenzzusammenhang 301 wird aus dem zeitlichen Verlauf der Frequenz ein zeitlicher Verlauf der auf dem Sensor abgeschiedenen oder abgetragenen Masse berechnet. Aus dem zeitlichen Verlauf wird mittels Dichte & Fläche 302 ein zeitlicher Verlauf der Schichtdicke berechnet. Aus dem zeitlichen Verlauf der Schichtdicke wird mittels Differentiation 303 die Abtrags- oder Abscheidegeschwindigkeit berechnet. Dabei entsteht ein verrauschtes Signal, aus dem mittels eines Tiefpass 304 die hochfrequenten Anteile herausgefiltert werden.

Fig.4 zeigt ein Blockschaltbild einer Ausführungsform des Verfahrens zur Bestimmung der Abtrags- oder Abscheidegeschwindigkeit sowie der Stromausbeute. Über den Masse-Frequenzzusammenhang 401 wird aus dem zeitlichen Verlauf der Frequenz ein zeitlicher Verlauf der auf dem Sensor abgeschiedenen oder abgetragenen Masse berechnet. Mittels Differentiation 402 wird aus dem zeitlichen Verlauf der Masse eine Masseänderung berechnet. Die Masseänderung wird mittels eines Tiefpasses 403 tiefpassgefiltert und mittels Dichte und Fläche 404 aus der tiefpassgefilterten Masseänderung die Abtrags- oder Abscheidegeschwindigkeit berechnet. Zudem wird aus der tiefpassgefilterten Masseänderung mittels des FARADAYschen Gesetztes 405 ein theoretisch erforderlicher Strom berechnet. Der theoretisch erforderliche Strom wird mit dem gemessenen Strom bei der Stromausbeuteberechnung 406 ins Verhältnis gesetzt.

Fig.5 zeigt ein Blockschaltbild einer vorteilhaften Ausgestaltung des Verfahrens von Fig.3 und Fig.4. Differentiation und Tiefpassfilterung sind durch eine Bandpassfilterung ersetzt, welche die Robustheit erhöht.

Fig.6 zeigt ein Blockschaltbild einer vorteilhaften Ausgestaltung des Verfahrens mit einer schichtdickenabhängigen Flächenkorrektur. Über den Masse-Frequenzzusammenhang 601 wird aus dem zeitlichen Verlauf der Frequenz ein zeitlicher Verlauf der auf dem Sensor abgeschiedenen oder abgetragenen Masse berechnet. Aus dem zeitlichen Verlauf der Masse wird mittels Dichte 602 und Fläche ein zeitlicher Verlauf der Schichtdicke berechnet. Der zeitliche Verlauf der Schichtdicke wird zu einer schichtdickenabhängigen Flächenkorrektur 603 rückgekoppelt. Mit der korrigierten Fläche wird der zeitliche Verlauf der Schichtdicke berechnet. Aus dem zeitlichen Verlauf der Schichtdicke wird mittels Differentiation 604 die Änderungsgeschwindigkeit der Schichtdicke berechnet. Das Rauschen dieser wird durch Tiefpassfilterung 605 reduziert.

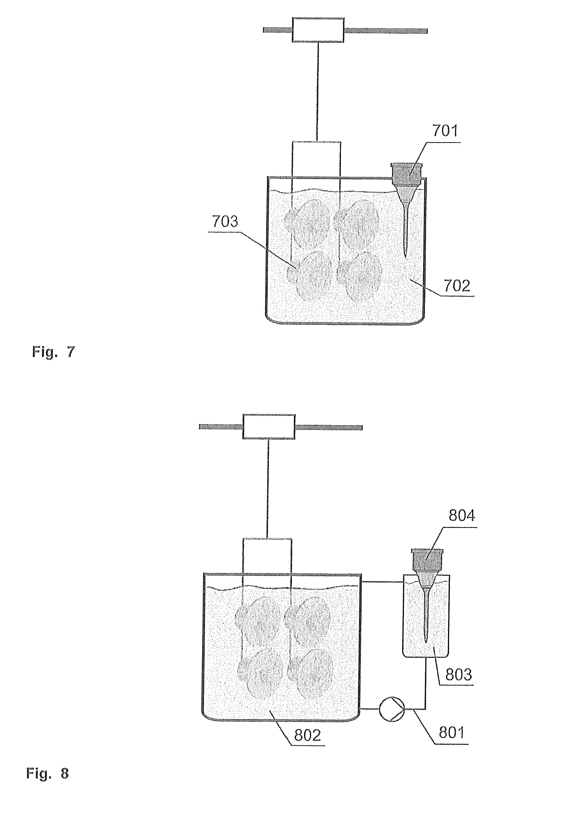

Fig.7 zeigt eine Ausgestaltung der Anordnung des Sensors im Prozess. Der Stabsensor 701 ist direkt in der Prozesswanne in der Prozesslösung 702 angeordnet, in der sich auch die Ware 703 befindet.

Fig.8 zeigt eine vorteilhafte Ausgestaltung der Anordnung des Sensors im Prozess. Hierbei ist vorgesehen, dass die Vorrichtung einen Bypass 801 und eine Messzelle 803 aufweist, wobei die Prozesslösung 802 über den Bypass 801 in die Messzelle 803 geleitet wird und dort unter definierten Bedingungen eine Abscheidung oder ein Abtrag am stabförmigen Sensor erfolgt.

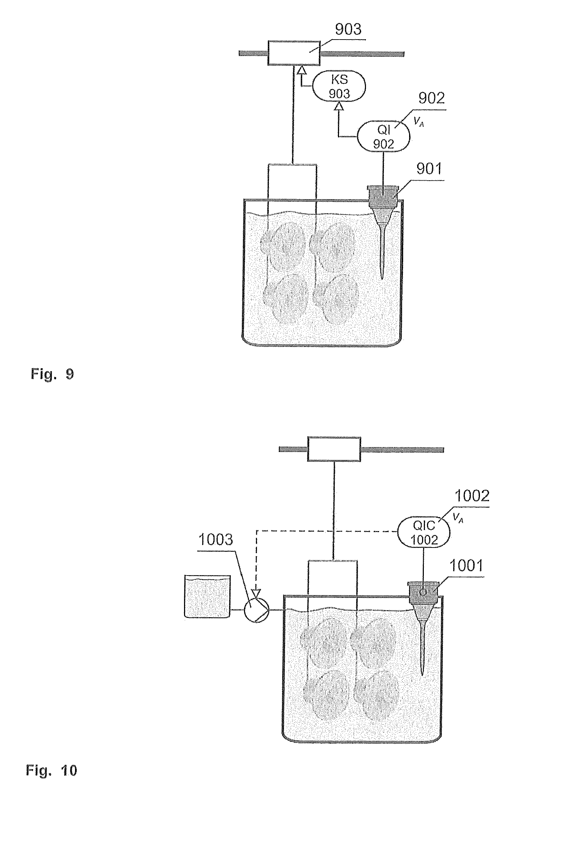

Fig.9 zeigt eine vorteilhafte Ausgestaltung der Anordnung des Sensors im Prozess. Die Anordnung weist eine Transportsteuerung 903 inklusive Steuerung der Behandlungszeit auf. Gemessene Werte der Abscheidegeschwindigkeit, Abtragsgeschwindigkeit oder Stromausbeute werden zur Überwachung des jeweiligen Oberflächenbehandlungsprozesses genutzt. Mittels der Transportsteuerung wird die Dauer der Behandlung der Warenoberfläche entsprechend des Messsignals der Abscheidegeschwindigkeit, Abtragsgeschwindigkeit oder Stromausbeute automatisch adaptiert und so spezifizierte Schichtdicken gezielt abgeschieden oder abgetragen.

Fig.10 zeigt eine weitere vorteilhafte Ausgestaltung der Anordnung, in der die Messung automatisiert zur Stabilisierung der Abscheidegeschwindigkeit, Abtragsgeschwindigkeit bzw. Stromausbeute mittels eines Reglers 1002 genutzt wird. Die Stabilisierung der Abscheidegeschwindigkeit, Abtragsgeschwindigkeit bzw. Stromausbeute kann durch eine geeignete Nachdosierung von Einsatzchemie 1003 erreicht werden.

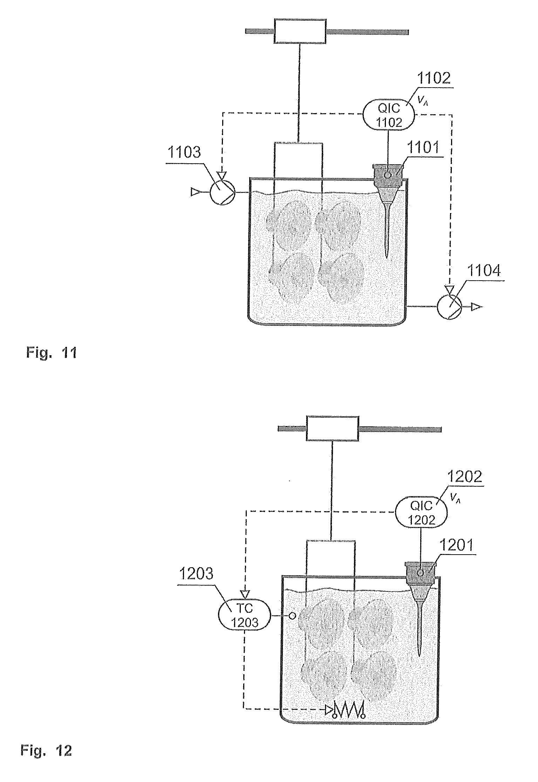

Fig.11 zeigt eine weitere vorteilhafte Ausgestaltung der Anordnung, in der die Messung automatisiert zur Stabilisierung der Abscheidegeschwindigkeit, Abtrags-geschwindigkeit bzw. Stromausbeute mittels eines Reglers 1102 genutzt wird. Die Stabilisierung wird durch Verwurf von Prozesslösung 1104 und entsprechenden Ersatz mit frischer oder störstoffarmer Prozesslösung 1103 erreicht.

Fig.12 zeigt eine weitere vorteilhafte Ausgestaltung der Anordnung, in der die Messung automatisiert zur Stabilisierung der Abscheidegeschwindigkeit, Abtrags-geschwindigkeit bzw. Stromausbeute mittels eines Reglers 1202 genutzt wird. Dies geschieht durch Adaptieren von Prozessparametern über unterlagerte Regelungen. Solche unterlagert geregelten Prozessgrößen sind die Temperatur der Prozesslösung, der pH-Wert oder die Stoffkonzentrationen. Daher ist eine Temperaturregelung 1203 vorgesehen.

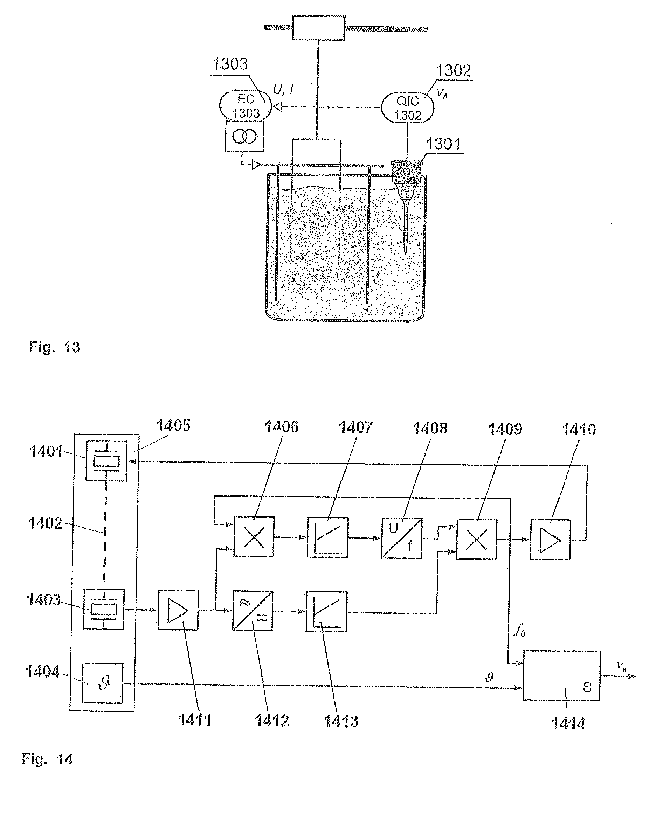

Fig.13 zeigt eine vorteilhafte Ausgestaltung der Anordnung in einem galvanischen Prozess, in der die Messung automatisiert zur Stabilisierung der Abscheidegeschwindig-keit, Abtragsgeschwindigkeit und insbesondere die Stromausbeute mittels eines Reglers 1302 genutzt wird. Die Stromausbeute wird durch Veränderung des eingeprägten Elektrolysestroms, d. h. durch Veränderung der Stromdichte mittels einer Stromdichteregelung 1303 in bestimmten Bereichen auf einen konstanten Wert geregelt.

Fig. 14 zeigt ein Blockschaltbild einer Ausführungsform des zugehörigen Signalverarbeitungssystems. Ein Stabsensor 1405 wird durch eine Schwingungsanregung in longitudinale Schwingungen versetzt, so dass sich im schwingenden Stab 1402 eine stehende Welle ausbildet. Die sich einstellende Schwingung wird durch einen Schwingungsaufnehmer 1403 rückgemessen. Die sich zwischen Erregungs- und Empfängerschwingung einstellende Phasenverschiebung dient als Grundlage für eine Phasenregelung 1406-1410, wobei die Erregungsfrequenz derart nachgeführt wird, dass der stabförmige Sensor 1405 fortlaufend mit seiner Eigenfrequenz schwingt. Das Signal des Schwingungsaufnehmers 1403 wird in einem nachgeschalteten Verstärker und Impedanzwandler 1411 verstärkt. Der Ausgang des Verstärkers und Impedanzwandlers 1411 ist mit einem Eingang eines Phasendetektors 1406 verbunden. Dem Phasendetektor 1406 ist ein Phasenregler 1407 nachgeschaltet. Dem Phasenregler 1407 ist ein spannungsgesteuerter Oszillator 1408 nachgeschaltet. Dem spannungsgesteuertem Oszillator ist ein Amplitudenverstärker 1409 nachgeschaltet. Der Ausgang des Amplitudenverstärkers 1409 ist mit dem Eingang des Phasendetektors 1406 verbunden. Die Erregungsfrequenz wird mittels des spannungsgesteuerten Oszillators 1408 so nachgeführt, dass durch den Phasenregler 1407 ein Phasenwinkel von 90° eingestellt wird und der Stabsensor 1405 fortlaufend mit seiner Eigenfrequenz schwingt. Der Ausgang des Amplitudenverstärkers ist eingangsseitig mit einem Signalverstärker 1410, welcher ausgangsseitig mit dem Element zur Schwingungsanregung 1401 verbunden ist, und dem Eingang einer Einheit zur Informationsverarbeitung 1414 verbunden. Die Einheit zur Informationsverarbeitung 1414 dient zur fortlaufenden Berechnung der Änderung der auf dem Sensor abgeschiedenen oder abgetragenen Masse sowie der Schichtdicke. Parallel zur Phasenregelung 1406-1408 ist eine Amplitudenregelung 1412-1413 realisiert. Dazu wird das mit dem Schwingungsaufnehmer 1403 rückgemessene Schwingungssignal in einem Verstärker 1411 verstärkt und in einem nachgeschalteten Gleichrichter 1412 gleichgerichtet und zu einem Amplitudenregler 1413 geleitet. Der Ausgang des Amplitudenreglers 1413 ist mit dem Amplitudenverstärker 1409 verbunden. Der Amplitudenregler steuert den Amplitudenverstärker 1409, der das vom spannungsgesteuerten Oszillator 1408 erzeugte Erregungssignal in seiner Amplitude verändert. Damit kann die Amplitude des empfangenen Signals so stabilisiert werden, dass auch bei großer Massebelegung auf dem Probekörper noch ein hinreichender Signal-Rausch-Abstand gewährleistet ist.

### Ausführungsbeispiel A

Es ist ein Prozess zur chemisch-reduktiven Nickelabscheidung zu überwachen und zu stabilisieren. Die verwendete Verfahrenslösung des Chemisch-Nickel-Prozesses enthält als Hauptkomponenten Nickelionen und das Reduktionsmittel Natriumhypophosphit. Die zu beschichtenden Stahlteile werden nach einer geeigneten Vorbehandlung (Reinigen, Dekapieren, Spülen) in die auf 85 bis 95°C erwärmte Prozesslösung eingebracht. Durch verschiedene Reaktionen von Nickel- und Hypophosphitionen scheidet sich auf der Warenoberfläche eine Nickel-Phosphorschicht ab. Im betrachteten Bespiel wird ein mittelphosphoriges Chemisch-Nickel-Verfahren verwendet, bei dem es zur Einlegierung von ca. 7 % ... 9 % Phosphor in der Schicht kommt.

Für eine Anwendung mit hohen Qualitätsanforderungen ist eine Schicht mit einer Dicke von 12 µm aufzubringen, wobei eine Toleranz von 2 µm spezifiziert ist. Die Abscheidegeschwindigkeit des verwendeten Verfahrens liegt laut Angabe des Verfahrenslieferanten im Bereich von 15 bis 20 µm/h. Somit ergeben sich zum Erreichen der geforderten Schichtdicke Beschichtungszeiten von 36 bis 48 min.

Während des klassischen Betriebes des Chemisch-Nickel-Prozesses kommt es zu Änderungen der Abscheidegeschwindigkeit. Diese wird erstens durch Anreicherung von Orthophosphit (umgesetztes Reduktionsmittel) und Sulfat (Nickelnachdosierung) in der Prozesslösung bewirkt. Zweitens beeinflusst der pH-Wert die Abscheidegeschwindigkeit. Drittens wirken auch relativ kleine Änderungen der Prozesslösungstemperatur auf die Geschwindigkeit der Abscheidung. Ferner haben eine Reihe weiterer in der Chemisch-Nickel-Prozesslösung enthaltenen Stoffe (Stabilisatoren, Beschleuniger, Puffersubstanzen) einen Einfluss auf die Abscheidegeschwindigkeit. Im laufenden Prozessbetrieb folgt somit die Schwierigkeit, die Beschichtungszeit so zu wählen, dass die angegebene enge Schichtdickentoleranz eingehalten werden kann. Ohne eine Möglichkeit zur Überwachung der Abscheidegeschwindigkeit bleibt nur der Weg, die Schichtdicke der Ware möglichst zeitnah zu messen. Werden Toleranzverletzungen festgestellt, sind Maßnahmen zu treffen, um die folgenden Teile korrekt zu beschichten (Veränderung der Beschichtungszeit und/oder Anpassung von Prozessparametern); die Teile mit Über- bzw. Unterschreitung der Toleranzgrenzen sind allerdings nachzuarbeiten oder als Ausschuss zu verwerfen.

Zur Lösung des Problems wird erfindungsgemäß eine Messeinrichtung zur Onlinemessung der Abscheidegeschwindigkeit genutzt. Dazu wird ein stabförmiger Sensor 701 in die Chemisch-Nickel-Prozesslösung 702 eingebracht. Der Stab besteht aus einem temperatur- und chemikalienbeständigen Kunststoff mit glatter Oberfläche. Auf der konisch gestalteten Sensorspitze 105 ist eine Stahlkappe 106 passgerecht aufgesteckt. Ein im Sensorkopf befindlicher piezoelektrischer Dickenschwinger 103 versetzt den Stabsensor in Längsschwingungen. Ein piezoelektrischer Aufnehmer 104 dient zur Rückmessung der sich einstellenden Schwingung. Wird die als Probekörper dienende Stahlkappe 106 nun in die Chemisch-Nickel-Prozesslösung getaucht, kommt es auf der Stahloberfläche zu einer autokatalytischen Nickelabscheidung. Auf dem nicht leitenden Sensorschaft 107 hingegen erfolgt keine Abscheidung.

Die im Sensorkopf des Stabsensors 1405 befindlichen piezoelektrischen Dickenschwinger zur Schwingungsanregung 1401 und zur Schwingungsaufnahme 1403 sind an eine elektronische Schaltung zur Phasenregelung angeschlossen. Dabei wird das über den Schwingungsaufnehmer 1403 rückgemessene Signal nach Verstärkung und Impedanzwandlung 1411 über einen Phasendetektor 1406 mit dem Anregungssignal verglichen. Der Gleichanteil des am Ausgang des Multiplizierers entstehenden Signals dient als Eingang für den Phasenregler 1407. Er nimmt bei einem Phasenwinkel von 90° zwischen Erregungs- und Empfängerschwingung den Wert Null an. Der Phasenregler 1407 hat somit die Aufgabe, den entsprechenden Gleichspannungsanteil auf null und damit den Phasenwinkel auf 90° zu regeln. Als Stellglied der Phasenregelung dient ein spannungsgesteuerter Oszillator 1408. Bei Betrieb des Schwingungssensors mit einer Phasenverschiebung von 90° zwischen Erregungs- und Empfängerschwingung schwingt der Stab mit seiner Eigenfrequenz.

Kommt es nun auf dem Probekörper an der Sensorspitze zu einer Chemisch-Nickel-Abscheidung, steigt die Masse des schwingenden Stabes, wodurch sich die Eigenfrequenz des schwingungsfähigen Systems verringert. Durch die oben beschriebene Phasenregelung folgt die Sensorschwingung fortlaufend der Eigenfrequenz. Aus der sich ändernden Eigenfrequenz wird in einer Einheit zur Informationsverarbeitung 1414 die aktuelle Massebelegung auf dem Probekörper an der Sensorspitze berechnet 301. Aus dem zeitlichen Verlauf der Masse wird mit Fläche des Probekörpers (6,16 cm²) und Dichte der abgeschiedenen Nickel-Phosphor-Schicht (8,1 g/cm³) fortlaufend die Schichtdicke ermittelt 302. Aus dem zeitlichen Verlauf der Schichtdicke kann wiederum durch Differentiation 303 und Tiefpassfilterung 304 ein zeitlicher Verlauf der Abscheidegeschwindigkeit kontinuierlich berechnet werden. Die gemessene Abscheidegeschwindigkeit liegt im betrachteten Beispiel bei ordnungsgemäßem Prozessbetrieb im Bereich von 15 bis 20 µm/h.

Der beschriebene messtechnische Aufbau realisiert eine Inlinemessung der Abscheidegeschwindigkeit. Da sich der Stabsensor 701 direkt in der Chemisch-Nickel-Prozesslösung 702 und in unmittelbarer Nähe der zu beschichtenden Ware 703 befindet, herrschen am Probekörper vergleichbare Prozessbedingungen (Temperatur, Stoffkonzentrationen, Hydrodynamik) wie an der Warenoberfläche. Somit wird der an der Warenoberfläche stattfindende Beschichtungsprozess am Probekörper gut nachgebildet. Durch Differenzwägung der Ware und des Probekörpers jeweils vor und nach der Beschichtung wird bestätigt, dass die Abscheidegeschwindigkeit am Sensor in guter Näherung der Abscheidegeschwindigkeit auf der Ware entspricht.

Beim Einsatz der Einrichtung zur Messung der Abscheidegeschwindigkeit am beschriebenen Chemisch-Nickel-Prozess sind verschiedene industrielle Anforderungen zu erfüllen. So ist eine einfache Bedienung und Wartung der Messgerätetechnik zu gewährleisten. Insbesondere muss ein unkomplizierter Wechsel des Probekörpers 106 möglich sein. Dazu wird der Stabsensor mit einer schwenkbaren Halterung, die sich manuell mit wenigen Handgriffen lösen lässt, am Rand der Prozesswanne befestigt. Somit kann der Stabsensor einfach aus der Flüssigkeit entnommen werden. Der Probekörper 106 ist als passgerechte Hülse gestaltet, die mit einem geeigneten Werkzeug einfach von der konischen Messspitze 105 lösbar ist. Bei der Messung im Chemisch-Nickel-Prozess ist weiterhin die hohe Prozesslösungs-temperatur zu berücksichtigen. So können bei Erwärmung des Stabsensors durch die thermische Längenausdehnung Messabweichungen auftreten. Um eine entsprechende Verfälschung der Messergebnisse zu vermeiden, wird im Sensorkopf des Stabsensors 1405 ein Temperaturaufnehmer 1404 installiert. In der Einheit zur Informationsverarbeitung 1414 wird das gemessene Temperatursignal genutzt, um die von Temperaturänderungen bewirkte Eigenfrequenzverschiebung durch eine entsprechende Korrekturrechung zu kompensieren.

Wie sich im Betrieb der Messtechnik zeigt, sind weitere Maßnahmen sinnvoll, um die Robustheit und Genauigkeit der Messung zu steigern. So kann die Qualität des Signals der Abscheidegeschwindigkeit verbessert werden, wenn als Alternative zur einfachen Differentiation 303 mit anschließender Tiefpassfilterung 304 ein Bandpassfilter 503 verwendet wird. Bei geeigneter Auslegung dieses Bandpassfilters 503 lässt sich ein zeitlicher Verlauf der Abscheidegeschwindigkeit berechnen, der weniger zeitverzögert ist und gleichzeitig ein geringeres Signalrauschen aufweist. Weiterhin ist es vorteilhaft, parallel zur Phasenregelung 1406-1408 eine Amplitudenregelung zu realisieren. Dazu wird das mit dem Schwingungsaufnehmer 1403 rückgemessene Schwingungssignal gleichgerichtet 1412 und zu einem Amplitudenregler 1413 geleitet. Der Reglerausgang steuert einen Amplitudenverstärker 1409, der das vom spannungsgesteuerten Oszillator 1408 erzeugte Erregungssignal in seiner Amplitude verändert. Damit kann die Amplitude des empfangenen Signals so stabilisiert werden, dass auch bei großer Massebelegung auf dem Probekörper noch ein hinreichender Signal-Rausch-Abstand gewährleistet ist.

Eine weitere Verbesserung der Robustheit der Messtechnik kann durch eine alternative Werkstoffauswahl für den Sensorstab erreicht werden. Der im beschriebenen Anwendungsfall verwendete Kunststoff weist zwar eine gute Temperatur- und Chemikalienbeständigkeit auf; bei sehr langer betrieblicher Nutzung raut die Oberfläche jedoch durch mechanischen Verschleiß auf. Das führt im Chemisch-Nickel-Prozess dazu, dass es zu verstärkter Wildabscheidung auf dem Sensorschaft 107 kommt, wodurch ein Strippen der unerwünschten Nickelabscheidung z. B. mit Salpetersäure häufiger nötig wird. Zur Lösung dieses Problems wird eine Edelstahlvariante des Sensors eingesetzt. Das Gehäuse wird nun mit dem Schutzpotential verbunden, welches die Chemisch-Nickel-Wanne vor Wildabscheidung schützt. Um nun auf dem Probekörper trotzdem eine Abscheidung zu ermöglichen, wird die Probekörperinnenseite mit einer nicht leitenden organischen Beschichtung versehen, die eine entsprechende Potentialtrennung zwischen dem Sensorgrundkörper 101 und dem Probekörper 106 gewährleistet.

Eine Maßnahme zur Steigerung der Messgenauigkeit ist die Berücksichtigung der Änderung der Oberfläche des Probekörpers bei der Abscheidung dicker Schichten. So lassen sich für den beschriebenen Chemisch-Nickel-Prozess durchaus Schichten von größer 200 µm abscheiden. Bei Verwendung eines Probekörpers mit einem Öffnungsdurchmesser von 9,5 mm, einer Länge von 30,5 mm und einem Durchmesser der Sensorspitze von 3 mm kommt es z. B. bei der Abscheidung einer 200 µm Schicht zu einer Änderung der Probekörperoberfläche von 6,16 cm² auf 6,40 cm², d. h. die Fläche steigt um 3,8 %. Damit ergibt sich bei der statischen Berechnung 302 der Schichtdicke aus der Schichtmasse eine entsprechende Messabweichung, die sich auch in der Messung der Abscheidegeschwindigkeit widerspiegelt. Diese kann vermieden werden, indem eine Flächenkorrektur 603 in Abhängigkeit der Dicke (bzw. der Masse) der aktuell auf dem Probekörper befindlichen Nickel-schicht angewendet wird.

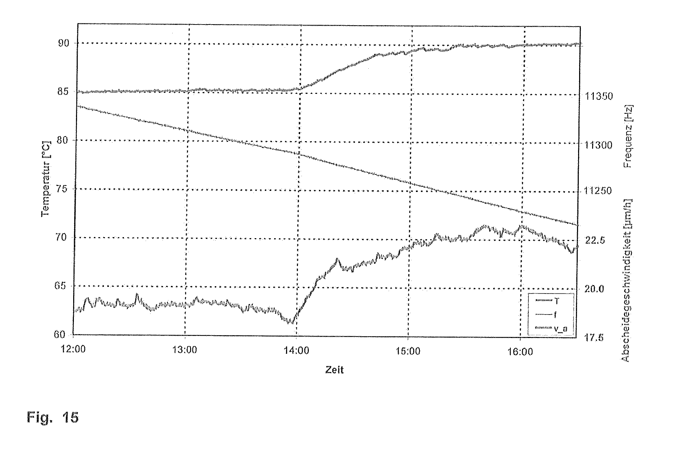

Durch die Inlinemessung der Abscheidegeschwindigkeit am beschriebenen Chemisch-Nickel-Prozess kann der ordnungsgemäße Prozessbetrieb fortlaufend und zeitnah überwacht werden. Darüber hinaus lässt sich der Messwert nutzen, um bei Veränderung der Abscheidegeschwindigkeit durch Anpassung von Prozessparametern eine Stabilisierung des Prozesses zu erreichen. Im beschriebenen Fall soll zur Steuerung der Abscheidegeschwindigkeit die Temperatur variiert werden, Fig. 12. Dazu wird in einem Vorversuch die Einrichtung zur Messung der Abscheidegeschwindigkeit eingesetzt, um den Zusammenhang zwischen Temperatur und Abscheidegeschwindigkeit zu untersuchen. Wie in Fig. 15 erkennbar ist, kommt es in einer frisch angesetzten Chemisch-Nickel-Prozesslösung bei einer Erhöhung der Prozesslösungstemperatur von 85 °C auf 90 °C zu einem Anstieg der Abscheidegeschwindigkeit von ca. 18,5 µm/h auf ca. 22,5 µm/h. In der Mitte von Fig. 15 ist zusätzlich der Verlauf der Eigenfrequenz des Stabsensors während des entsprechenden Versuchs erkennbar. Die Kenntnis des konkreten Zusammenhangs zwischen Prozesslösungstemperatur und Chemisch-Nickel-Abscheidegeschwindigkeit, wird nun zur Prozessstabilisierung genutzt. Dazu wird das mit dem Sensor zur Messung der Abscheidegeschwindigkeit 1201 ermittelte Signal an einen Regelblock 1202 geleitet, der eine Führungsgröße für eine unterlagerte Temperaturregelung 1203 bildet. Somit wird gewährleistet, dass insbesondere dem Absinken der Abscheidegeschwindigkeit durch ein automatisches Anheben der Temperatur entgegengewirkt wird.

### Ausführungsbeispiel B

Ein Prozess zum salzsauren Leitplattenätzen ist zu überwachen und zu stabilisieren. Di verwendete Ätzlösung enthält Kupfer(II)chlorid und Salzsäure. Auf den zu fertigenden Leiterplatten werden die künftigen Leiterzüge durch organische Ätzresistive geschützt. Die Ätzlösung enthält 75 bis 110 g/l Salzsäure. Der Kupfergehalt liegt zwischen 100 und 140 g/l. Bei einer Temperatur der Ätzlösung von 45 bis 50 °C stellen sich typische Ätzgeschwindigkeiten im Bereich von 30 bis 45 µm/min ein.

Beim Kupferätzen wird das metallische Kupfer durch Reaktion mit Kupfer-II-Ionen unter Bildung von Kupfer-I-Ionen aufgelöst. Da mit steigender Kupfer-I-Konzentration und sinkender Kupfer-II-Konzentration die Ätzgeschwindigkeit absinkt, ist eine Regeneration der Ätzlösung nötig. Diese wird durch Zusatz von Wasserstoffperoxid erreicht, welches das einwertige zu zweiwertigem Kupfer aufoxidiert. Durch den Ätzprozess steigt der Gesamtkupfergehalt der Ätzlösung. Der steigende Kupfergehalt führt ebenfalls zum Absinken der Ätzgeschwindigkeit. Um hier entgegenzuwirken, muss regelmäßig Ätzlösung verworfen werden und durch kupferfreie Lösung ersetzt werden.

Die Kupfer-I-Konzentration wird durch eine vom Redoxpotential abhängige Dosierung von Wasserstoffperoxid stabilisiert. Die Gesamt-Kupfer-Konzentration wird durch eine Dichtemessung der Ätzlösung überwacht und durch entsprechenden Verwurf gesenkt. Trotz dieser Stabilisierung der Konzentrationsverhältnisse treten gewisse Schwankungen der Ätzgeschwindigkeit auf, die immer wieder zu unzureichendem Metallabtrag oder zu einer verlängerten Ätzzeit führen.

Zur Lösung des Problems wird erfindungsgemäß eine Messeinrichtung zur Onlinemessung der Abtragsgeschwindigkeit genutzt. Dazu wird auf die Spitze des aus einem ätzresistenten Edelstahl bestehenden Stabsensors 105 ein Kupfer-Probekörper 106 formschlüssig aufgebracht. Der Stabsensor wird in einer Messzelle 803 platziert, die durch einen Bypass 801 mit dem die Ätzlösung enthaltenden Behälter 802 verbunden ist. In der von der Ätzlösung durchströmten Messzelle findet nun eine Auflösung des Probekörpers statt. Dadurch nimmt die Masse des Stabsensors ab und es kommt zu einer entsprechenden Eigenfrequenzerhöhung. Durch die Phasenregelung 1401-1410 wird der Stabsensor fortlaufend in seiner Eigenfrequenz betrieben. Aus der gemessenen Eigenfrequenz wird in einem Mikroprozessorsystem 1414 die Abtragsgeschwindigkeit berechnet. Da in der Messzelle 803 definierte Strömungsbedingungen herrschen, ist die gemessene Abtragsgeschwindigkeit ein Maß für die Wirksamkeit der Ätzlösung. Lässt diese Ätzwirkung durch Abnahme der Kupfer-I-Konzentration oder durch Anstieg des Gesamtkupfergehaltes nach, spiegelt sich das unmittelbar in der online gemessenen Abtragsgeschwindigkeit wider.

Die verwendeten Probekörper aus Kupfer sind nach einer bestimmten Zeit vollständig aufgelöst und müssen dann erneuert werden. Da mit relativ hohen Abtragsgeschwindigkeiten gearbeitet wird, ist es sinnvoll, die Standzeiten der Probekörper durch ein diskontinuierliches Messregime zu verlängern. Dazu wird die Messkammer viertelstündlich für 30 Sekunden durchströmt; in den Zwischenzeiten befindet sich keine Ätzlösung in der Messzelle, sodass es zu keinem Metallabtrag kommt. Bei einer Probekörperdicke von 1,2 mm ergibt sich für die Abtragsgeschwindigkeit von 30 bis 45 µm/min eine Standzeit eines Probekörpers von ca. 13 bis 20 Stunden. Das danach nötige Aufstecken eines neuen Probekörpers ist unkompliziert, da der Stabsensor in einer Führung gehalten und somit einfach aus der Messzelle entnommen bzw. wieder eingesteckt werden kann. Um eine Autokalibrierung zu ermöglichen, wird ein Probekörper mit bekanntem Gewicht verwendet und die Eigenfrequenzen werden vor und nach dem Aufstecken des Probekörpers gemessen. Da der Zusammenhang zwischen Massebelegung und gemessener Eigenfrequenz 301 gut durch eine nichtlineare Funktion mit zwei Parametern darstellbar ist, lassen sich diese beiden Parameter aus der Probekörpermasse und den Eigenfrequenzen vor und nach dem Aufstecken berechnen. Entsprechend kann bei jedem Aufstecken eines Probeköpers die Kalibrierung automatisch durchgeführt werden.

Das Messsignal wird zur Überwachung der Aktivität der Ätzlösung verwendet. Darüber hinaus kann durch die Messung der Abtragsgeschwindigkeit die Redoxpotentialmessung oder die Dichtemessung ersetzt werden. Im ersten Fall wird zur Stabilisierung der Kupfer-I-Konzentration und damit der Ätzgeschwindigkeit nicht eine Redoxpotentialmessung sondern der Sensor für die Abtragsgeschwindigkeit 1001 genutzt, indem bei sinkender Ätzgeschwindigkeit über einen Regler 1002 mit einer Pumpe 1003 Wasserstoffperoxid nachdosiert wird. Im zweiten Fall wird zur Stabilisierung der Gesamt-Kupfer-Konzentration und damit der Ätzgeschwindigkeit nicht eine Dichtemessung sondern der Sensor für die Abtragsgeschwindigkeit 1101 genutzt, indem bei sinkender Ätzgeschwindigkeit über einen Regler 1102 mit einer Pumpe 1104 Ätzlösung entnommen wird, die mit einer weiteren Pumpe 1103 durch kupferfreie Lösung ersetzt wird.

### Ausführungsbeispiel C

Ein alkalischer Prozess zur Abscheidung von Zink-Nickel-Schichten ist zu überwachen und zu stabilisieren. Die verwendete Prozesslösung enthält Zink, Nickel (in Form von organischen Aminkomplexen), Natronlauge und verschiedene organische Zusätze. Die Zinkkonzentration liegt im Bereich von 8 bis 12 g/l, der Nickelgehalt bei 1,2 bis 2,0 g/l und die Konzentration des Natriumhydroxids im Bereich von 100 bis 150 g/l. Die galvanische Legierungsabscheidung wird im Stromdichtebereich von 1,0 bis 3,0 A/dm² bei einer Elektrolyttemperatur von 20 bis 27 °C betrieben. Bei den genannten Bedingungen wird eine Zinklegierung mit 12 bis 15 % Nickelgehalt abgeschieden und es stellen sich Stromausbeuten der Metallabscheidung von 40 bis 50 % ein. Entsprechend ergeben sich Abscheidegeschwindigkeiten von 8 bis 20 µm/h.

Für Korrosionsschutzanwendungen ist auf Gestellteilen aus Stahl eine 8 µm dicke Zink-Nickel-Schicht aufzubringen. Dazu wird die Ware bei einer Stromdichte von 2,0 A/dm² für 35 min beschichtet; die spezifizierte Schichtdicke wird mit dieser Behandlungszeit bei einer mittleren Stromausbeute von 45 % erreicht. Unter betrieblichen Bedingungen ist die Stromausbeute jedoch kein konstanter Wert. Beim betrachteten alkalischen Zink-Nickel-Prozess hängt die Stromausbeute von verschiedenen Prozessgrößen ab. So beeinflussen insbesondere die Konzentrationen der Metalle (Zink, Nickel), der Natronlauge und des sich anreichernden Carbonates die Stromausbeute. Auch die Gehalte organischer Zusätze sowie die Prozesslösungstemperatur haben einen Einfluss auf die Stromausbeute. Veränderungen der Stromausbeute sind jedoch problematisch, da sie bei einer vorgegebenen Behandlungszeit zu einer Veränderung der abgeschiedenen Schichtdicke führen. Besonders kritisch ist hierbei das Absinken der Stromausbeute, da dieses ein Unterschreiten der geforderten Schichtdicke und somit das Nichterfüllen einer wichtigen Qualitätsforderung bewirkt. So führt ein Abfallen der Stromausbeute von 45 % auf 40 % bei 35 min Behandlungszeit zu einer Verringerung der Schichtdicke von 8,6 µm auf 7,6 µm und damit zum Unterschreiten der spezifizierten Schichtdicke. Um dieser Gefahr entgegenzuwirken, ist eine regelmäßige analytische Kontrolle der Prozessparameter (insbesondere der Konzentrationen von Zink, Nickel, Natriumhydroxid und Natriumcarbonat) zwingend. Die entsprechende Analytik erfordert erheblichen Aufwand. Deshalb kann sie nur in größeren zeitlichen Abständen durchgeführt werden. Dass es in den Zeiten zwischen den Analysen nicht zu unerwünschten Änderungen der Stromausbeute und somit zu Schichtdickenabweichungen kommt, kann nicht garantiert werden; dieses muss durch abschließende Schichtdickenmessungen abgesichert werden.

Zur Lösung des Problems wird erfindungsgemäß eine Messeinrichtung zur Onlinemessung der Stromausbeute genutzt. Dazu wird der Stabsensor 701 direkt in den Zink-Nickel-Elektrolyt 702 und in unmittelbarer Nähe der zu beschichtenden Ware 703 eingebracht. Damit eine prozessadäquate Abscheidung auf der Spitze des Stabsensors 205 stattfindet, befindet sich im Elektrolyt eine separate Gegenelektrode 211. Diese Anode ist geometrisch so gestaltet, dass sich an der Stabspitze eine gleichmäßige kathodische Stromausbeute herausbildet. Die Gegenelektrode ist durch eine elektrische Verbindung 212 mit einer elektrischen Stromquelle 210 verbunden. Der Stromkreis wird durch eine weitere elektrische Verbindung 209, über den Sensorkopf 202 und über den Sensorgrundkörper 201 geschlossen. Die Abscheidung findet direkt auf der Spitze des Edelstahlstabes 205 statt. Um ausschließlich auf einer definierten Fläche an der empfindlichen Sensorspitze abzuscheiden, wird die Oberfläche 207 des Sensorschaftes mit einer nicht leitenden Schutzschicht z. B. aus Polyvinylchlorid versehen. Die Stromquelle 210 realisiert einen Strom, der eine Stromdichte auf der Sensorspitze bewirkt, die der mittleren Stromdichte auf der zu beschichtenden Ware entspricht. Die Abscheidung der Zink-Nickel-Schicht führt zu einer Massezunahme an der Spitze des Stabsensors 205. Die Massezunahme bewirkt wiederum eine Verringerung der Eigenfrequenz des Stabsensors. Durch die Phasenregelung 1401-1410 wird der Stabsensor fortlaufend in seiner Eigenfrequenz betrieben. Aus der gemessenen Eigenfrequenz wird in einem Mikroprozessorsystem 1414 unter Nutzung des FARADAYschen Gesetzes 405 die Stromausbeute berechnet 406. Der beschriebene messtechnische Aufbau realisiert eine Inlinemessung der Stromausbeute. Da die Messung direkt in der Prozesslösung und in unmittelbarer Nähe der Warenbehandlung durchgeführt wird, herrschen an der Sensorspitze vergleichbare Prozessbedingungen (Temperatur, Stoffkonzentrationen, Hydrodynamik) wie an der Warenoberfläche. Somit wird der an der Warenoberfläche stattfindende Beschichtungsprozess am Sensor gut nachgebildet.

Mit fortlaufendem Betrieb des Sensors wird eine zunehmend dicke Zink-Nickel-Schicht auf der Sensorspitze abgeschieden. Kommt es bei sehr dicken Schichten zum Aufrauen der Schicht, ist die Äquivalenz der Abscheidung auf der Ware und auf dem Sensor nicht mehr gegeben, da sich die Abscheidefläche des Sensors und damit die Stromdichte in undefinierter Weise ändert. Daher muss der Sensors nach einer bestimmten Einsatzzeit entschichtet werden. Dieses kann prinzipiell durch chemisches oder elektrochemisches Auflösen erfolgen. Beim beschriebenen Zink-Nickel-Prozess ist ein elektrochemisches Rücklösen der Metallschicht vorteilhaft. Dazu wird beim Erreichen eines bestimmten Schichtgewichtes die Polung der Stromquelle 210 umgekehrt und eine geeignete Elektrolysespannung realisiert. Dadurch kommt es an der Stabspitze zur anodischen Auflösung der Zink-Nickel-Schicht.

Beim beschriebenen prinzipiell cyanidfreien Zink-Nickel-Verfahren entstehen jedoch durch anodische Umsetzung von Komplexbildnern in gewissem Umfang Cyanide. Um das zu verhindern werden teilweise so genannte Membrananoden eingesetzt. Das heißt, es werden inerte Anoden verwendet, die durch Membranen von der Zink-Nickel-Elektrolytlösung separiert sind. Um beim Einsatz der erfindungsgemäßen Stromausbeutemessung eine Cyanidbildung auch an der Anode des Messprozesses 211 zu verhindern, ist es vorteilhaft, die Anode 211 durch eine geeignete Ionenaustauschermembran vom Zink-Nickel-Elektrolyten zu separieren.

Die beschriebene Onlinemessung kann in verschiedener Weise zur Prozessführung der Zink-Nickel-Abscheidung genutzt werden. So kann die parallel zur Stromausbeutemessung 405, 406 stattfindende Messung der Abscheidegeschwindigkeit 404 dazu dienen, die Dauer der Beschichtung der Ware zu variieren. Voraussetzung dazu ist eine entsprechende Eingriffsmöglichkeit in das Warentransportsystem 903. Somit wird auch bei sinkender Stromausbeute und damit sinkender Abscheidegeschwindigkeit das Erreichen der geforderten Schichtdicke gewährleistet. Bietet das Transportsystem keine Veränderungsmöglichkeit der Beschichtungsdauer oder lässt der geforderte Anlagendurchsatz keine Verlängerung der Beschichtungsdauer zu, kann alternativ die Stromdichte variiert werden 1303, sodass die Abscheidegeschwindigkeit stabilisiert wird. Somit kann bei konstanter Beschichtungsdauer eine konstante Schichtdicke gesichert werden. Nachteilig an diesem Vorgehen ist die sich verändernde Stromausbeute, wodurch nicht in einem energieoptimalen Betrieb gearbeitet wird. Außerdem können merkliche Schwankungen der Stromausbeute Veränderungen der Schichteigenschaften bewirken. Bei Anwendungen, bei denen solche Eigenschaftsänderungen kritisch sind, kann es daher von Vorteil sein, durch Variation der Stromdichte 1303 die Stromausbeute zu stabilisieren und damit die Abscheidebedingungen zu stabilisieren.

Die Erfindung wurde anhand von Beispielen und Figuren näher erläutert, wobei diese Darstellung die Erfindung nicht einschränken soll. Es versteht sich, dass Fachleute Änderungen und Abwandlungen machen können, ohne den Umfang der folgenden Ansprüche zu verlassen.

### Bezugszeichenliste

- 101: Sensorgrundkörper
- 102: Sensorkopf
- 103: Element zur Schwingungsanregung
- 104: Aufnehmer zur Rückmessung der Schwingung
- 105: Sensorspitze
- 106: Sensoroberfläche oder Probekörper zur Schichtabscheidung oder zum Schichtabtrag
- 107: Sensoroberfläche ohne Schichtabscheidung oder Schichtabtrag
- 108: Sensorkopfgehäuse

- 201: Sensorgrundkörper
- 202: Sensorkopf
- 203: Element zur Schwingungsanregung
- 204: Aufnehmer zur Rückmessung der Schwingung
- 205: Sensorspitze
- 206: Sensoroberfläche oder Probekörper zur Schichtabscheidung oder zum Schichtabtrag
- 207: Sensoroberfläche ohne Schichtabscheidung oder Schichtabtrag
- 208: Sensorkopfgehäuse
- 209: elektrische Verbindung zum Anschluss des Sensors
- 210: elektrische Stromquelle
- 211: Gegenelektrode
- 212: elektrische Verbindung zum Anschluss der Gegenelektrode
- 301: Masse-Frequenz-Zusammenhang
- 302: Dichte und Fläche der abgeschiedenen und abgetragenen Schicht
- 303: Differenziation
- 304: Tiefpass

- 401: Masse-Frequenz-Zusammenhang
- 402: Differenziation
- 403: Tiefpass
- 404: Dichte und Fläche der abgeschiedenen und abgetragenen Schicht
- 405: FARADAYsches Gesetz
- 406: Stromausbeuteberechnung
- 501: Masse-Frequenz-Zusammenhang
- 502: Dichte und Fläche der abgeschiedenen und abgetragenen Schicht
- 503: Bandpass

- 601: Masse-Frequenz-Zusammenhang
- 602: Dichte der abgeschiedenen oder abgetragenen Schicht
- 603: schichtdickenabhängige Flächenkorrektur
- 604: Differenziation

- 701: Stabsensor
- 702: Prozesslösung
- 703: Ware

- 801: Bypass
- 802: Prozesslösung
- 803: Messzelle
- 804: Stabsensor

- 901: Stabsensor
- 902: Messung der Abscheidegeschwindigkeit
- 903: Transportsteuerung inklusive Steuerung der Behandlungszeit

- 1001: Stabsensor
- 1102: Messung und Nachregelung der Abscheidegeschwindigkeit
- 1103: Nachdosierung unverbrauchter Prozesslösung
- 1104: Verwurf verbrauchter Prozesslösung

- 1201: Stabsensor
- 1202: Messung und Regelung der Abscheidegeschwindigkeit
- 1203: Temperaturregelung

- 1301: Stabsensor
- 1302: Messung und Regelung der Abscheidegeschwindigkeit
- 1303: Stromdichteregelung

- 1401: Schwingungsanregung
- 1402: schwingender Stab
- 1403: Schwingungsaufnehmer
- 1404: Temperaturaufnehmer
- 1405: Stabsensor
- 1406: Multiplizierer
- 1407: Phasenregler
- 1408: spannungsgesteuerter Oszillator (VCO)
- 1409: Multiplizierer
- 1410: Signalverstärker
- 1411: Verstärker und Impedanzwandler
- 1412: Gleichrichter
- 1413: Amplitudenregler
- 1414: Informationsverarbeitung

## Patentansprüche

1. Verfahren zur Messung der Geschwindigkeit bei der Abscheidung oder beim Abtrag von Oberflächen, **dadurch gekennzeichnet, dass**
(a) ein stabförmiger Sensor in den Prozess der Abscheidung oder des Abtrags eingebracht wird, sodass an einem Teil des Sensors (106) eine Abscheidung oder ein Abtrag stattfindet,
(b) der stabförmige Sensor so erregt wird (103), dass er eine longitudinale Schwingung ausführt, wobei die Erregungsfrequenz und die Sensorgeometrie aufeinander abgestimmt sind, sodass sich im Stab eine stehende Welle einstellt, bei der sich der Knotenpunkt der Schwingung am Erregungspunkt und ein Maximum der longitudinalen Auslenkung an der Stabspitze (105) befinden,
(c) die sich am Sensorstab einstellende Schwingung rückgemessen wird (104),
(d) der Phasenwinkel zwischen Erregungs- und Empfängerschwingung durch fortlaufendes Nachführen der Erregungsfrequenz auf 90° geregelt wird (1407), sodass der Stabsensors mit seiner Eigenfrequenz schwingt,
(e) aus dem zeitlichen Verlauf der Eigenfrequenz ein zeitlicher Verlauf der Masse der auf dem Sensorteil in Abscheidung oder Abtrag befindlichen Schicht berechnet wird (301).

2. Verfahren nach Anspruch 1, **dadurch gekennzeichnet, dass** aus dem zeitlichen Verlauf der Masse der auf dem Sensorteil in Abscheidung oder Abtrag befindlichen Schicht mittels Fläche und Dichte (302) der am Sensor abgeschiedenen oder abgetragenen Schicht eine Schichtdicke ermittelt wird, wobei vorzugsweise eine schichtdickenabhängige Flächenkorrektur (603) berücksichtigt wird.

3. Verfahren nach Anspruch 2, **dadurch gekennzeichnet, dass** aus dem zeitlichen Verlauf der Schichtdicke, vorzugsweise durch Differentiation (303) und Tiefpassfilterung (304), besonders bevorzugt mittels eines geeigneten Bandpassfilters (503) ein zeitlicher Verlauf der Zunahme- oder Abnahmegeschwindigkeit der Schicht, das heißt eine Abscheide- oder Abtragsgeschwindigkeit der Form Schichtänderung pro Zeiteinheit, berechnet wird, wobei besonders bevorzugt aus dem zeitlichen Verlauf der Masse oder der Schichtdicke ein zeitlicher Verlauf der Änderungsgeschwindigkeit der Massebelegung, vorzugsweise mittels eines geeigneten Bandpassfilters (503), ermittelt wird.

4. Verfahren nach Ansprüche 1 bis 3, **dadurch gekennzeichnet, dass** es sich bei dem Prozess der Abscheidung oder des Abtrags um einen galvanischen Prozess handelt, der durch Einprägen eines elektrischen Stromes in eine elektrolytische Prozesslösung mittels einer Gegenelektrode (211) und einer in Form des leitfähigen Sensorteils (206) ausgebildeten Elektrode realisiert wird, so dass auf dem leitfähigen Sensorteil (206) galvanisch abgeschieden oder abgetragen wird und
dass zusätzlich aus dem zeitlichen Verlauf der Änderungsgeschwindigkeit der Massebelegung und dem über den Sensor realisierten elektrischen Strom unter Nutzung des FARADAYschen Gesetzes (405) ein zeitlicher Verlauf der Stromausbeute ermittelt wird.

5. Verfahren nach einem der Ansprüche 1 bis 4, **dadurch gekennzeichnet, dass** ein nach einer bestimmten Einsatzzeit des Sensors nötiges Entfernen der Probeschicht (106, 206) durch chemisches oder elektrochemisches Auflösen erfolgt.

6. Verfahren nach einem der Ansprüche 1 bis 5, **dadurch gekennzeichnet, dass** der Zusammenhang zwischen Eigenfrequenz der Sensorschwingung und Masse der auf dem Sensor in Abscheidung oder Abtrag befindlichen Schicht als parametrisierbare mathematische Funktion darstellbar ist, die Funktionsparameter durch eine Autokalibrierung ermittelt werden, wozu die sich beim Verbinden eines Probekörpers (106, 206) bekannter Masse mit dem Stabsensor ändernde Eigenfrequenz ausgewertet wird.

7. Verfahren nach einem der Ansprüche 1 bis 6, **dadurch gekennzeichnet, dass** die am Stabsensor herrschenden Prozessbedingungen, insbesondere Temperatur, Hydrodynamik, bei galvanischen Prozessen zusätzlich die Stromdichte möglichst ähnlich den Prozessverhältnissen an dem zu behandelnden Substrat eingestellt werden, um ein Abbild der am Substrat ablaufenden Prozesse in Form der gemessenen Verläufe der Abscheidegeschwindigkeit, Abtragsgeschwindig-keit oder Stromausbeute zu erhalten oder die am Stabsensor herrschenden Prozessbedingungen, insbesondere Temperatur, Hydrodynamik und bei galvanischen Prozessen auch die Stromdichte, konstant eingestellt werden und somit die gemessenen Verläufe der Abscheidegeschwindigkeit, Abtragsgeschwindigkeit oder Stromausbeute ein Maß für die Wirksamkeit der Prozesslösung darstellen.

8. Verfahren nach einem der Ansprüche 1 bis 7, **dadurch gekennzeichnet, dass** das Messsignal der Abscheidegeschwindigkeit oder Abtragsgeschwindigkeit
zur Variation der Dauer der Behandlung des Substrats und/oder
zur Stabilisierung der Abscheidegeschwindigkeit oder
Abtragsgeschwindigkeit durch Nachdosieren von Einsatzchemie (1003)
und/oder
zur Stabilisierung der Abscheidegeschwindigkeit oder Abtragsgeschwindigkeit durch Verwurf von Prozesslösung (1104) und entsprechenden Ersatz mit frischer oder störstoffarmer Prozesslösung (1103)
und/oder
zur Stabilisierung der Abscheidegeschwindigkeit oder Abtragsgeschwindigkeit durch Adaptieren von Prozessparametern, wie Temperatur (1203), pH-Wert oder Stoffkonzentrationen, über unterlagerte Regelungen verwendet wird.

9. Verfahren nach einem der Ansprüche 4 bis 7, **dadurch gekennzeichnet, dass** das Messsignal der Stromausbeute zur Variation der Dauer der Behandlung des Substrats
und/oder
zur Stabilisierung der Stromausbeute durch Nachdosieren von Einsatzchemie (1003)
und/oder
zur Stabilisierung der Stromausbeute durch Verwurf von Prozesslösung (1104) und entsprechenden Ersatz mit frischer oder störstoffarmer Prozesslösung (1103)
und/oder
zur Stabilisierung der Stromausbeute durch Adaptieren von Prozessparametern, wie Temperatur (1203), pH-Wert oder Stoffkonzentrationen, über unterlagerte Regelungen
und/oder
zur Stabilisierung der Stromausbeute durch Variation der Stromdichte (1303) des galvanischen Oberflächenbehandlungsprozesses verwendet wird.

10. Vorrichtung zur Durchführung des Verfahrens nach Anspruch 1, **dadurch gekennzeichnet, dass** diese einen Sensor in Form eines stabförmiges Sensorgrundkörpers (101, 102) mit einem Sensorkopf (102) und einer Sensorspitze (105) aufweist,
wobei am Sensorkopf (102) ein Element (103) zur piezoelektrischen oder magnetostriktiven Erzeugung einer longitudinalen Schwingung und ein Aufnehmer (104) zur Rückmessung der sich einstellenden Schwingung des Sensors angekoppelt ist,
wobei die Sensorspitze (105) eine begrenzte Oberfläche (106) zur Schichtabscheidung oder zum Schichtabtrag aufweist, wobei die restliche Sensoroberfläche (107) so gestaltet ist, dass keine Abscheidung oder kein Abtrag stattfindet, weiterhin **gekennzeichnet durch** eine angekoppelte Regeleinrichtung (1407), die eine Regelung des Phasenwinkel von 90° zwischen Erregungs- und Empfängerschwingung **durch** Verändern der Erregungsfrequenz (1408) realisiert sowie **durch** eine Einheit zur Informationsverarbeitung (1414), die aus dem Verlauf der Erregungsfrequenz fortlaufend eine Masseänderung oder eine Geschwindigkeit der Abscheidung oder des Abtrags berechnet.

11. Vorrichtung nach Anspruch 10, **dadurch gekennzeichnet, dass** diese einen der Abscheidung oder dem Abtrag dienenden Probekörper (106 bzw. 206) aufweist, der mit der Sensorstabspitze (105 bzw. 205) leicht montier- und lösbar, form- oder kraftschlüssig verbunden ist, wobei vorzugsweise die den Probekörper (106 bzw. 206) tragende Spitze des Stabsensors durch eine leicht lösbares Schwenk- oder Steckeinrichtung in die bzw. aus der Prozesslösung bewegbar ist.

12. Vorrichtung nach Anspruch 10 oder 11, **dadurch gekennzeichnet,**
**dass** die begrenzte Oberfläche der Sensorspitze (105, 205) aus einem elektrisch leitendem Material ausgebildet ist und über eine elektrische Verbindung (209) als Elektrode geschaltet an eine Stromquelle (210) angeschlossen ist,
**dass** die Vorrichtung eine Gegenelektrode (211) aufweist, die über eine elektrische Verbindung (212) an die Stromquelle (210) angeschlossen und in Position und Abstand geeignet in der elektrolytischen Prozesslösung platziert ist, wobei die Gegenelektrode (211) vorzugsweise konstruktiv so gestaltet ist, dass sich eine gleichmäßige Stromdichte auf der Fläche des Abtrags oder der Abscheidung ausbildet,
**dass** mittels der Einheit zur Informationsverarbeitung (1114) aus dem Verlauf der Erregungsfrequenz fortlaufend die Stromausbeute berechnet wird,
wobei vorzugsweise der Sensorgrundkörper (101,102) aus einem nicht leitenden Material besteht oder mit einer nicht leitenden Schutzschicht überzogen ist oder im Fall dass der Sensorgrundkörper (101 bzw. 201) und der Probekörper (106 bzw. 206) aus elektrisch leitenden Materialien bestehen, diese voneinander isoliert und mit einer unterschiedlichen Spannung beaufschlagbar ausgebildet sind, so dass in Folge des sich ergebenden Potentialunterschieds eine Abscheidung bzw. ein Abtrag auf dem Sensorgrundkörper (101 bzw. 201) verhindert wird.

13. Vorrichtung nach einem der Ansprüche 10 bis 12, **dadurch gekennzeichnet, dass** diese ein Regelglied (1413) zur Regelung der Erregungsleistung der longitudinalen Schwingung aufweist, um die Amplitude der Empfängerschwingung auf einen konstanten Wert zu regeln.

14. Vorrichtung nach einem der Ansprüche 10 bis 13, **dadurch gekennzeichnet, dass** diese eine Trennschicht zur Separierung des die Gegenelektrode (211) umgebenden Elektrolyts und des die aktive Sensorfläche (206) umgebenden Elektrolyts aufweist, wobei die Trennschicht vorzugsweise in Form eines Diaphragmas oder einer für die eingesetzten Elektrolyte passenden Ionenaustauschmembran ausgebildet ist.

15. Vorrichtung nach einem der Ansprüche 10 bis 14, **dadurch gekennzeichnet, dass** diese Mittel zur Temperaturmessung an einem oder mehreren Punkten im Sensor aufweist, vorzugsweise im Sensorschaft und in der Nähe der Schwingungserregung (103, 203) und der Schwingungsmessung (104, 204) erfolgt, welche so konfiguriert sind, dass die Temperaturabhängigkeit der Eigenfrequenz bei der Berechnung der Massebelegung kompensiert wird.

## Claims

1. A method for measuring the speed during the deposition, or during the removal of surfaces, **characterized in that**
(a) a rod-shaped sensor is introduced into the process of deposition or removal such that a deposition or removal of material occurs on a part of the sensor (106),
(b) the rod-shaped sensor is excited (103) to perform a longitudinal oscillation, wherein the excitation frequency and the sensor geometry are coordinated such that a stationary wave is set in the rod in which the node of the oscillation is located at the excitation point and a maximum of the longitudinal displacement is located at the rod tip (105),
(c) a feedback measurement of the oscillation that sets in on the sensor rod is performed (104),
(d) the phase angle between the excitation- and receiver oscillation is regulated (1407) by continuous tracking of the excitation frequency at 90°, thereby ensuring that the sensor rod oscillates at its natural frequency,
(e) a time course of the mass of the layer present on the sensor part in deposition or removal is calculated (301) from the time course of the natural frequency.

2. The method according to claim 1, **characterized in that** a layer thickness is determined from the time course of the mass of the layer present on the sensor part in deposition or removal by means of the surface area and density (302) of the layer deposited onto or removed from the sensor, wherein a surface-area correction (603) dependent on the layer thickness is preferably taken into account.

3. The method according to claim 2, **characterized in that** a time course of the speed of the increase or decrease of the layer, i.e., a speed of material deposition or removal, is calculated from the time course of the layer thickness, in the form of layer change per unit of time, preferably by means of differentiation (303) and low-pass filtering (304), particularly preferably by means of a suitable band-pass filter (503), wherein, particularly preferably, a time course of the change in the speed of the mass occupancy is determined from the time course of the mass or of the layer thickness, preferably by means of a suitable band-pass filter (503).

4. The method according to claims 1 to 3, **characterized in that** the process of deposition or removal is a galvanic process, which is carried out by impressing an electric curent into an electrolytic process solution by means of a counter-electrode (211) and an electrode embodied in the form of the conductive sensor part (206) such that material is galvanically deposited onto or removed from the conductive sensor part (206) and such that, in addition, a time course of the current efficiency is determined from the time course of the change in speed of the mass occupancy and the electric current obtained via the sensor using Faraday's law (405).

5. The method according to any one of the claims 1 to 4, **characterized in that** a removal of the sample layer (106, 206), which is required after a certain period of use of the sensor, takes place via chemical or electrochemical dissolution.

6. The method according to any one of the claims 1 to 5, **characterized in that** the relationship between the natural frequency of the sensor oscillation and the mass of the layer located on the sensor in deposition or removal can be represented as a parametrizable mathematical function and the function parameters are determined by an automatic calibration, for the purpose of which the natural frequency is evaluated, wherein said natural frequency changes when a sample body (106, 206) having a known mass is connected to the rod sensor.

7. The method according to any one of the claims 1 to 6, **characterized in that** the process conditions present at the rod sensor, in particular temperature, hydrodynamics, and, in the case of galvanic processes, the current density as well, are adjusted to be as similar as possible to the process conditions at the substrate to be treated in order to obtain a picture of the processes taking place on the substrate in the form of measured courses of the deposition speed, removal speed, or current efficiency, or the process conditions present at the rod sensor, in particular temperature, hydrodynamics, and, in the case of galvanic processes, the current density as well, are set to be constant and, therefore, the measured courses of the deposition speed, removal speed, or current efficiency are a measure of the efficacy of the process solution.

8. The method according to any one of the claims 1 to 7, **characterized in that** the measurement signal of the deposition speed or the removal speed is used to
vary the duration of the treatment of the substrate
and/or
stabilize the deposition speed or the removal speed by dosing additional chemistry that is used (1003)
and/or
stabilize the deposition speed or the removal speed by discarding process solution (1104) and replacing this correspondingly with fresh or interferent-poor process solution (1103)
and/or
stabilize the deposition speed or removal speed by adapting process parameters, such as temperature (1203), pH value, or substance concentration, via lower-order controls.

9. The method according to any one of the claims 4 to 7, **characterized in that** the measurement signal of the current efficiency is used to vary the duration of the treatment of the substrate
and/or
stabilize the current efficiency by dosing additional chemistry that is used (1003)
and/or
stabilize the current efficiency by discarding process solution (1104) and replacing this correspondingly with fresh or interferent-poor process solution (1103)
and/or
stabilize the current efficiency by adapting process parameters, such as temperature (1203), pH value, or substance concentration, via lower-order controls
and/or
stabilize the current efficiency by varying the current density (1303) of the galvanic surface-treatment process.

10. A device for carrying out the method according to claim 1, **characterized in that** said device comprises a sensor in the form of a rod-shaped sensor main body (101, 102) having a sensor head (102) and a sensor tip (105),
wherein an element (103) is provided on the sensor head (102) for piezoelectrically or magnetostrictively producing a longitudinal oscillation, and a detector (104) is coupled thereon for the feedback measurement of the oscillation of the sensor that sets in,
wherein the sensor tip (105) has a limited surface (106) for layer deposition or layer removal, wherein the remaining sensor surface (107) is designed such that no deposition or removal occurs,
further **characterized by** a coupled control device (1407), which controls the phase angle of 90° between the excitation and receiver oscillation by changing the excitation frequency (1408) and by a unit for processing information (1414), which continuously calculates a mass change or a speed of material deposition or removal from the course of the excitation frequency.

11. The device according to claim 10, **characterized in that** said device comprises a sample body (106 or 206), which is used for deposition or removal and which is connected to the sensor rod tip (105 or 205, respectively) in a positive or non-positive manner and so as to be easily installed and removed, wherein the tip of the rod sensor carrying the sample body (106 or 206) is preferably movable into and out of the process solution by means of an easily detachable swivel or insertion device.

12. The device according to claim 10 or 11, **characterized in that** the limited surface of the sensor tip (105, 205) is formed of an electrically conductive material and is connected, as an electrode, to a current source (210) via an electric connection (209),
**in that** the device has a counter-electrode (211), which is connected via an electric connection (212) to the current source (210) and is placed, in a suitable position and with suitable separation, in the electrolytic process solution, wherein the counter-electrode (211) is preferably designed such that a uniform current density forms on the surface of the removal or the deposition,
**in that** the current efficiency is continuously calculated from the course of the excitation frequency by means of the unit for information processing (1114),
wherein the sensor main body (101, 102) is preferably made of a non-conductive material or is coated with a non-conductive protective layer or, in the event that the sensor main body (101 or 201) and the sample body (106 or 206, respectively) are made of an electrically conductive material, these are insulated from one another and can be acted upon with a different voltage, wherein the resultant potential difference prevents a deposition onto or removal from the sensor main body (101 or 201).

13. The device according to any one of the claims 10 to 12, **characterized in that** said device comprises a regulating element (1413) for regulating the excitation power of the longitudinal oscillation in order to regulate the amplitude of the receiver oscillation to a constant value.

14. The device according to any one of the claims 10 to 13, **characterized in that** said device has a separating layer for separating the electrolyte surrounding the counter-electrode (211) and the electrolyte surrounding the active sensor surface (206), wherein the separating layer is preferably designed in the form of a diaphragm or an ion exchange membrane that is appropriate for the electrolyte that is used.

15. The device according to any one of the claims 10 to 14, **characterized in that** said device comprises means for measuring the temperature at one or more points in the sensor, preferably in the sensor shaft, and preferably taking place in the vicinity of the oscillation excitation (103, 203) and the oscillation measurement (104, 204), which are configured such that the temperature dependence of the natural frequency is compensated for in the calculation of the mass occupancy.

## Revendications

1. Procédé pour la mesure de la vitesse lors du dépôt ou lors de l'enlèvement de matière sur une surface, **caractérisé en ce que**
(a) une sonde en forme de tige est intégrée au procédé de dépôt ou d'enlèvement de matière, de sorte qu'un dépôt ou un enlèvement de matière est effectué sur une partie de la sonde (106),
(b) la sonde en forme de tige est excitée (103) de manière à effectuer une oscillation longitudinale, la fréquence d'excitation et la géométrie de la sonde étant adaptées l'une à l'autre, de sorte qu'une onde stationnaire s'établit dans la tige, dont le noeud d'oscillation se situe au point d'excitation, et un maximum de la déviation longitudinale se situe à la pointe de la tige (105),
(c) l'oscillation établie sur la tige de sonde est mesurée (104),
(d) l'angle de phase entre l'oscillation d'excitation et l'oscillation de récepteur est réglé à 90° par un suivi constant de la fréquence d'excitation (1407), de sorte que la sonde oscille avec sa fréquence propre,
(e) une évolution dans le temps de la masse de la couche déposée ou enlevée sur la partie de sonde est mesurée (301) à partir de l'évolution de la fréquence propre dans le temps,

2. Procédé selon la revendication 1, **caractérisé en ce qu'**à partir de l'évolution dans le temps de la masse de la couche déposée ou enlevée sur la partie de sonde, une épaisseur de couche est déterminée sur la base de la surface et de l'épaisseur (302) de la couche déposée ou enlevée sur la sonde, sachant qu'une correction de surface (603) dépendante de l'épaisseur de couche est de préférence prise en compte.

3. Procédé selon la revendication 2, **caractérisé en ce qu'**une évolution dans le temps de la vitesse d'augmentation ou de diminution de la couche, c'est-à-dire une vitesse de dépôt ou d'enlèvement sous la forme d'une modification de couche par unité de temps, est calculée à partir de l'évolution de l'épaisseur de couche dans le temps, de préférence par différentiation (303) et par filtrage passe-bas (304), de façon particulièrement préférentielle au moyen d'un filtre passe-bande (503) approprié, sachant qu'une évolution dans le temps de la vitesse de modification de l'occupation de la masse est déterminée à partir de l'évolution dans le temps de la masse ou de l'épaisseur de couche, de préférence au moyen d'un propre filtre passe-bande (503).

4. Procédé selon les revendications 1 à 3, **caractérisé en ce que** le procédé de dépôt ou d'enlèvement est un procédé galvanique, réalisé par application d'un courant électrique dans une solution de procédé électrolytique au moyen d'une contre-électrode (211) et d'une électrode formée par la partie conductrice de la sonde (206), de manière à réaliser un dépôt ou un enlèvement galvanique sur la partie conductrice de la sonde (206) et à déterminer de surcroît une évolution dans le temps du rendement du courant, à partir de l'évolution dans le temps de la vitesse de modification de l'occupation de la masse et du courant électrique établi par le biais de la sonde, à l'aide de la loi de Faraday (405).

5. Procédé selon l'une des revendications 1 à 4, **caractérisé en ce qu'**un retrait nécessaire de la couche d'essai (106, 206) après un certain temps d'utilisation de la sonde est effectué par dissolution chimique ou électrochimique.

6. Procédé selon l'une des revendications 1 à 5, **caractérisé en ce que** le rapport entre la fréquence propre d'oscillation de la sonde et la masse de la couche déposée ou enlevée sur la sonde peut être représenté comme une fonction mathématique paramétrable, les paramètres de la fonction étant déterminés par un auto-étalonnage, en évaluant à cet effet la fréquence propre variant lors de la liaison d'un corps d'essai (106, 206) de masse connue avec la sonde.

7. Procédé selon l'une des revendications 1 à 6, **caractérisé en ce que** les conditions de procédé régnant sur la sonde, en particulier la température, l'hydrodynamique et la densité de courant pour les procédés galvaniques, sont réglées au plus près possible des rapports de procédé sur le substrat à traiter, afin d'obtenir une image des procédés en cours sur le substrat, sous la forme d'une mesure des évolutions de la vitesse de dépôt, de la vitesse d'enlèvement ou du rendement du courant, ou **en ce que** les conditions de procédé régnant sur la sonde, en particulier le température, l'hydrodynamique et la densité de courant pour les procédés galvaniques, sont maintenues constantes, et les évolutions mesurées de la vitesse de dépôt, de la vitesse d'enlèvement et de l'intensité de courant représentent donc une mesure pour l'efficacité de la solution de procédé.

8. Procédé selon l'une des revendications 1 à 7, **caractérisé en ce que** le signal de mesure de la vitesse de dépôt ou de la vitesse d'enlèvement est utilisé pour
faire varier la durée de traitement du substrat,
et/ou
stabiliser la vitesse de dépôt ou la vitesse d'enlèvement par ajout de chimie (1003),
et/ou
stabiliser la vitesse de dépôt ou la vitesse d'enlèvement par un rejet de solution de procédé (1104) et un remplacement correspondant par une solution de procédé (1103) nouvelle ou pauvre en impuretés,
et/ou
stabiliser la vitesse de dépôt ou la vitesse d'enlèvement par une adaptation de paramètres de procédé, tels que la température (1203), la valeur de pH ou les concentrations de matière, par des régulations intégrées.

9. Procédé selon l'une des revendications 4 à 7, **caractérisé en ce que** le signal de mesure du rendement du courant est utilisé pour faire varier la durée du traitement du substrat,
et/ou
stabiliser le rendement du courant après ajout de chimie (1003),
et/ou
stabiliser le rendement du courant par un rejet de solution de procédé (1104) et un remplacement correspondant par une solution de procédé nouvelle ou pauvre en impuretés (1103)
et/ou
stabiliser le rendement du courant par une adaptation des paramètres de procédé, tels que la température (1203), la valeur de pH ou les concentrations de matière, par des régulations intégrées,
et/ou
stabiliser le rendement du courant en faisant varier l'intensité de courant (1303) du procédé de traitement de surface galvanique.

10. Dispositif pour l'exécution du procédé selon la revendication 1, **caractérisé en ce que** celui-ci comporte une sonde sous la forme d'un corps de base de sonde en forme de tige (101, 102) avec une tête de sonde (102) et une pointe de sonde (105), dans lequel un élément (103) destiné à produire une oscillation longitudinale de façon piézoélectrique ou magnétostrictive et un récepteur (104) destiné à mesurer l'oscillation établie de la sonde sont accouplés à la tête de sonde (102), dans lequel la pointe de sonde (105) présente une surface supérieure limitée (106) pour le dépôt de couche ou l'enlèvement de couche, dans lequel le reste de la surface supérieure de la sonde (107) est conçu de manière à ne subir aucun dépôt ni aucun enlèvement,
en outre **caractérisé par** un dispositif de réglage (1407) accouplé, lequel effectue un réglage de l'angle de phase à 90° entre l'oscillation d'excitation et l'oscillation de récepteur en modifiant la fréquence d'excitation (1408), et par une unité de traitement d'information (1414) calculant continuellement une variation de masse ou une vitesse de dépôt ou d'enlèvement à partir de l'évolution de la fréquence d'excitation.

11. Dispositif selon la revendication 10, **caractérisé en ce que** celui-ci comporte un corps d'essai (106 ou 206) servant au dépôt ou à l'enlèvement, lequel est relié par complémentarité de forme ou par blocage à la pointe de la sonde (105 ou 205) de manière facile à monter et à détacher, la pointe de la sonde portant le corps d'essai (106 ou 206) pouvant de préférence être introduite dans ou sortie de la solution de procédé à l'aide d'un dispositif pivotant ou enfichable facile à détacher.

12. Dispositif selon la revendication 10 ou 11, **caractérisé en ce que** la surface supérieure limitée de la pointe de la sonde (105, 205) est constituée d'un matériau électriquement conducteur et raccordée à une source de courant (210) par une liaison électrique (209) en tant qu'électrode,
**en ce que** le dispositif comporte une contre-électrode (211) raccordée à la source de courant (210) par une liaison électrique (212) et placée dans la solution de procédé électrolytique dans une position et à une distance appropriées, la contre-électrode (211) étant de préférence construite de manière à former une intensité de courant homogène sur la surface d'enlèvement ou de dépôt,
**en ce que** l'unité de traitement d'information (1114) permet de calculer le rendement du courant à partir de l'évolution de la fréquence d'excitation,
dans lequel le corps de base de la sonde (101, 102) est de préférence constitué d'un métal non conducteur ou recouvert d'une couche de protection non conductrice, ou, dans le cas où le corps de base de la sonde (101 ou 201) et le corps d'essai (106 ou 206) sont constitués de matériaux électriquement conducteurs, ceux-ci sont isolés l'un de l'autre et conçus de manière à pouvoir être soumis à des tensions différentes, de manière à empêcher un dépôt ou un enlèvement sur le corps de base de la sonde (101 ou 201) en raison de la différence de potentiel résultante.

13. Dispositif selon l'une des revendications 10 à 12, **caractérisé en ce que** celui-ci comporte un organe de réglage (1413) pour le réglage de la puissance d'excitation de l'oscillation longitudinale, permettant de régler l'amplitude d'oscillation de récepteur sur une valeur constante.

14. Dispositif selon l'une des revendications 10 à 13, **caractérisé en ce que** celui-ci comporte une couche de séparation pour séparer l'électrolyte entourant la contre-électrode (211) d'avec l'électrolyte entourant la surface active de la sonde (206), la couche de séparation étant de préférence formée comme un diaphragme ou comme une membrane d'échange d'ions adaptée aux électrolytes employés.

15. Dispositif selon l'une des revendications 10 à 14, **caractérisé en ce que** celui-ci comporte des moyens pour mesurer la température en un ou plusieurs points dans la sonde, de préférence dans la tige de la sonde ou à proximité de l'excitation d'oscillation (103, 203) et de la mesure d'oscillation (104, 204), lesquels sont configurés de manière à compenser la dépendance de la fréquence propre vis-à-vis de la température lors du calcul de l'occupation de la masse.
